Europäisches Patentamt

European Patent Office

Office européen des brevets

(11) Publication number: **0 193 385 B1**

## EUROPEAN PATENT SPECIFICATION

(45) Date of publication of patent specification: **22.07.92**   (51) Int. Cl.⁵: **G01N 35/00, C12Q 1/00**

(21) Application number: **86301357.9**

(22) Date of filing: **26.02.86**

(54) **Automated microbiological testing appparatus and method.**

(30) Priority: **27.02.85 US 706068**
       **01.03.85 US 707339**

(43) Date of publication of application:
     **03.09.86 Bulletin 86/36**

(45) Publication of the grant of the patent:
     **22.07.92 Bulletin 92/30**

(84) Designated Contracting States:
     **BE DE FR GB IT NL**

(56) References cited:
     **EP-A- 0 012 698        EP-A- 0 051 496**
     **FR-A- 2 350 393        FR-A- 2 357 881**
     **FR-A- 2 408 136        US-A- 3 730 364**
     **US-A- 4 448 534**

     **PATENT ABSTRACTS OF JAPAN, vol. 8, no.
     133 (P-281)[1570], 20th June 1984; & JP-A-59
     35 148 (TOKYO SHIBAURA DENKI K.K.)
     25-02-1984**

(73) Proprietor: **SHERWOOD MEDICAL COMPANY
     1915 Olive Street
     St. Louis, Missuri 63103(US)**

(72) Inventor: **Farber, Glenn Lawrence
     1551 Patchogue Road
     Port Jefferson New York 11776(US)**
     Inventor: **Navarro, Maria Carolina
     15 Canterbury Road
     Great Neck New York 11020(US)**
     Inventor: **Hegemann, Manfred Karl
     10 Ferris Lane
     Nyack New York 10960(US)**
     Inventor: **Cohn, Samuel Gersen
     1215 Bedford Road
     Pleasantville New York 10570(US)**
     Inventor: **Cox, Cameron Otzen
     38D Monsey Boulevard
     Monsey New York 10952(US)**

(74) Representative: **Porter, Graham Ronald et al
     c/o Wyeth Laboratories Huntercombe Lane
     South
     Taplow Maidenhead Berkshire SL6 0PH(GB)**

## Description

This invention relates to microbiological testing apparatus and methods, and more particularly to an improved system for facilitating the automatic incubation and reading of microbiological test trays.

A number of different types of microbiological testing are carried out in trays or strips (referred to herein collectively as "trays") which have a number of chambers known as test wells or cupules. Such trays are used, for example, to identify a micro-organism, or to determine the susceptibility of that organism to a number of antimicrobial agents, which latter trays are called susceptibility trays. Typically, the test wells or cupules in the identification trays contain complex chemicals or reagents which in the presence of an active fermenting culture change colour, become cloudy or otherwise indicate that fermentation is or has taken place. Similarly, in one known susceptibility test called the minimum inhibiting concentration (MIC) test, the wells contain different dilutions of various antimicrobial agents and a growth medium to determine the dilution level of the antimicrobial agents which is sufficient to kill and/or inhibit growth of the organism.

Conventionally, the test reagents and any growth medium or antimicrobial agents are placed into the test wells in the form of an aqueous solution and later lyophilized. A different combination of reagent or growth medium is charged into different wells so that a great number of individual reactions are performed in a physically small apparatus. For example, in the MIC tests, a regular pattern of wells arranged in rows and columns could be provided, each row of wells containing different antimicrobial agents. Within a row, the concentration of the antimicrobial agents would increase from well to well by a factor of, for example, 2. Of course, other dilution ratios could be used.

When a test is to be performed, a micro-organism is innoculated into each of the test chambers with sufficient water to reconstitute the reagents. The test trays are then incubated at an appropriate temperature, such as 35-37 degrees Celsius for an extended period of time. After a predetermined period, the individual chambers are examined for the presence or absence of a reaction or indication of colour change, or a change in turbidity. Heretofore, it is believed that the inspection of the wells for the presence or absence of a reaction or indication was done manually at least in part. Thus, individual trays each required the use of technician's time in the preparation, innoculation, incubation and reading of the results. Moreover, since different test trays might be needed to determine different characteristics of the micro-organisms, the reading of a variety of different trays could be a fairly complex procedure.

Systems have been provided for automating at least a portion of the reading process. In one existing system for use in semi-automatically recording the results of microbiological tests, a test tray having a plurality of test wells arranged in a certain pattern is placed beneath a transparent keyboard. A light source projects light through the tray and the keyboard so that the user can view the tray with its test wells through the keyboard. The keys of the keyboard correspond to the test wells, so that the user presses the keys overlying those wells in which the certain test results have occurred in order to record the results of the tests conducted in the test wells. Such a method of reading the test wells requires a highly skilled technician and a good deal of technician's time. In addition, the incubation times for identification and susceptibility trays may be quite different, with the result that the user will be recording the results for a particular patient or specimen at two different times, with the possibility that the identification and susecptibility results might not be properly assigned to the same patient. Moreover, the difference in times of incubation for identification and susceptibility trays means that the user operator must return twice to the incubator for each patient.

Patent abstracts of Japan vol. 8 No 133, p 281 [1570] discloses an automatic chemical analyser in which a reaction plate with a plurality of reaction tubes arranged thereon is passed to a multistage thermostatic chamber after passing through a test piece injection section and a reagent injection section and then to a measurement station. Following the measurement the reaction plate is sent back to the original position to be ready for subsequent sampling.

EP-A-12698 discloses an apparatus and method for determining the end point in a viral assay in which a multi-well assay plate is placed in a slot illuminated by a light source. A TV camera is positioned above the plate to scan the plate and display its image on a screen.

FR-A-2408136 discloses an apparatus for determining optical density in which a plate containing test wells is mounted on a carrier and moved on a track over a light source and read by a photoelectric cell.

US-A-3730364 discloses an apparatus for charging samples to an analysing apparatus in a prescribed time sequence having a conveyor for sequentially moving a series of tray receivers into a charging position relative to the analysing apparatus, a reciprocable charging rod for moving a tray containing a sample from its respective tray receiver on the conveyor into a analysing apparatus and having a hook thereon for removing the tray from the analysing apparatus following analysis and a device for unloading the residue of the analysis from the tray into a collecting box.

Among the various aspects and features of the present invention may be noted the provision of an apparatus for automating the microbiological test procedure from incubation through to the actual reading of the test tray itself; the provision of such an apparatus which eliminiates to a large extent the necessity of having a highly trained technician to read test results; the provision of such an apparatus which ensures that identification and susceptibility results for the same patient remain together; the provision of such an apparatus which is compatible with currently available identification and susceptibility test trays; the provision of such an apparatus that is flexible enough to use with a number of different tray combinations; and the provision of such an apparatus which is relatively economical to use.

According to the invention there is provided a microbiological testing apparatus comprising an incubation chamber for incubating a plurality of microbiological test trays, each tray having a plurality of wells; an inspection station at which the test trays may be inspected; means for moving any predetermined test tray as desired from the incubation chamber to the inspection station; characterised in that said means for moving includes track means and at least one carrier capable of carrying one test tray in a first location therein and one test tray in a second location therein; removing means capable of removing the test tray from said first location without removing the test tray from said second location, the apparatus including means including a video camera for producing an image of test trays at said inspection station and means for processing said image to determine test results.

Preferably the incubation chamber is disposed vertically, the trays being stacked one above another and the moving means including an elevator for moving a predetermined test tray to a level corresponding to the inspection station. Means may also be provided for moving a tray from the incubation chamber to the inspection station and back again.

The elevator may have two stacks. Sensing means may be provided to determine the position of the elevator; the sensing means may be Hall-effect sensors.

In the preferred embodiment the trays are disposed in slots in the elevator and sensing means, including a photodiode sensor, are provided for detecting whether a slot is occupied.

Trays may be transported from the incubation chamber to the inspection chamber along one or more parallel tracks and sensing means, which may include a Hall-effect sensor, may be provided to determine the position of the trays on the track.

The trays are transported by a carrier and each carrier may have provision for transporting two trays.

The apparatus may include pulling means engageable with the carrier to move it along the track.

A waste bin may be provided into which redundant trays may be automatically dumped. A photodiode sensor may indicate when the waste bin is full.

In the preferred embodiment the apparatus further includes dispensing means for dispensing reagent from a replaceable reagent source module. Individual pumps are provided to dispense particular reagents from corresponding nozzles.

The apparatus may include means for controlling temperature and humidity in the incubation chamber.

The carrier may include provision for writing an identification code thereon.

The apparatus includes a video camera disposed to form images of the test tray at the inspection chamber. Additional lighting sources and filters may be provided.

In the preferred embodiment the carrier includes means to locate one or more trays therein and access means to permit one of the trays to be removed from the carrier for dumping.

The invention also provides a method for automatically analysing tests prepared in microbiological test trays such as susceptibility trays and identification trays, the trays each having a plurality of wells, comprising the steps of making an image with a video camera of a tray to be read; electronically analysing only predetermined areas of interest in the image made by the camera, which areas of interest are substantially within the outlines of the tray wells; for each well of interest, electronically determining whether an area of interest therein has an associated value that exceeds a predetermined threshold for that area of interest; and electronically assigning a binary partial result to each well based upon whether a predetermined threshold for each corresponding area of interest is exceeded characterised in that the tests are prepared in an identification tray and a susceptibility tray which are each mounted in a common carrier and the common carrier is automatically moved to an inspection station where one of the test trays is electronically analysed at a first predetermined time and removed from the carrier, and the other test tray is then electronically analysed at a later, second predetermined time. Other aspects of the method and alternatives will be apparent from the following description and claims appended hereto.

Other aspects of the invention will be apparent from the following description of a preferred embodiment shown, by way of example only, in the accompanying drawings in which:-

Figure 1 is a front elevation with parts broken away for clarity, of microbiological testing apparatus of the present invention;

Figure 2 is a side elevation with parts broken away of the apparatus of Figure 1;

Figure 3 is a schematic drawing of the internal components of the apparatus of Figure 1;

Figure 4 is a plan view, with parts broken away for clarity, of the apparatus of Figure 1;

Figure 5 is a perspective illustration of a tray carrier and transporting means of the present invention;

Figure 6 is a plan view of the tray carrier of Figure 5 showing portions of identification and susceptibility trays in place;

Figure 7 is a section taken along line 7-7 of Figure 6;

Figure 8 is a front (left end) elevation of the carrier of Figure 6;

Figure 9 is a rear (right end) elevation of the carrier of Figure 6;

Figure 10 is a plan view of an identification tray suitable for use with the apparatus of the present invention;

Figure 11 is a section taken along line 11-11 of Figure 10;

Figure 12 is a plan view of a susceptibility tray suitable for use with the apparatus of the present invention;

Figure 13 is an elevation of the tray of Figure 12;

Figure 14 is a schematic illustration of the reagent handling and identification tray removal subassemblies of the apparatus of Figure 1;

Figure 15 is a perspective illustration of the reagent reservoir of the apparatus of the present invention;

Figure 16 is a schematic illustration of carrier presence sensing apparatus of the present invention;

Figure 17 is a schematic illustration of elevator position sensing apparatus of the present invention; and

Figure 18 is a schematic illustration of carrier position sensing apparatus of the present invention.

The same reference characters indicate similar parts throughout the several views of the drawings.

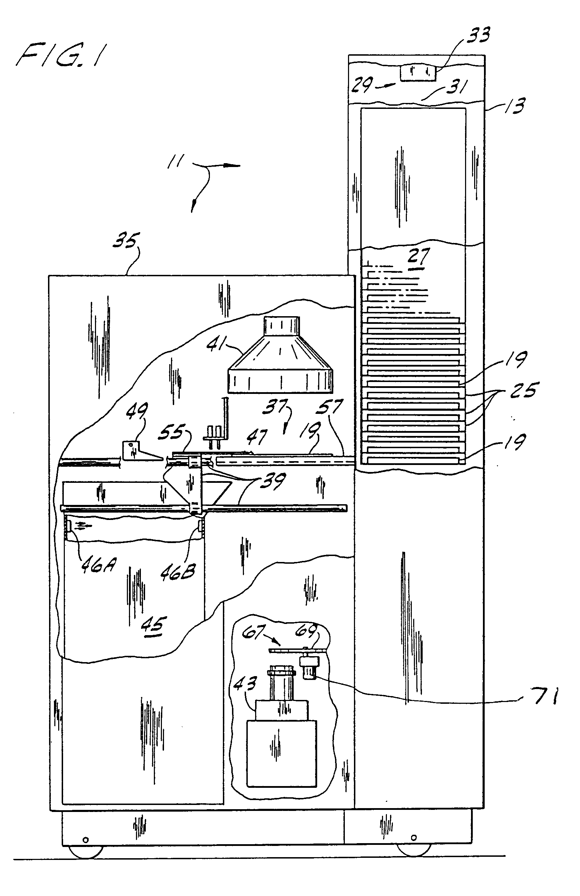

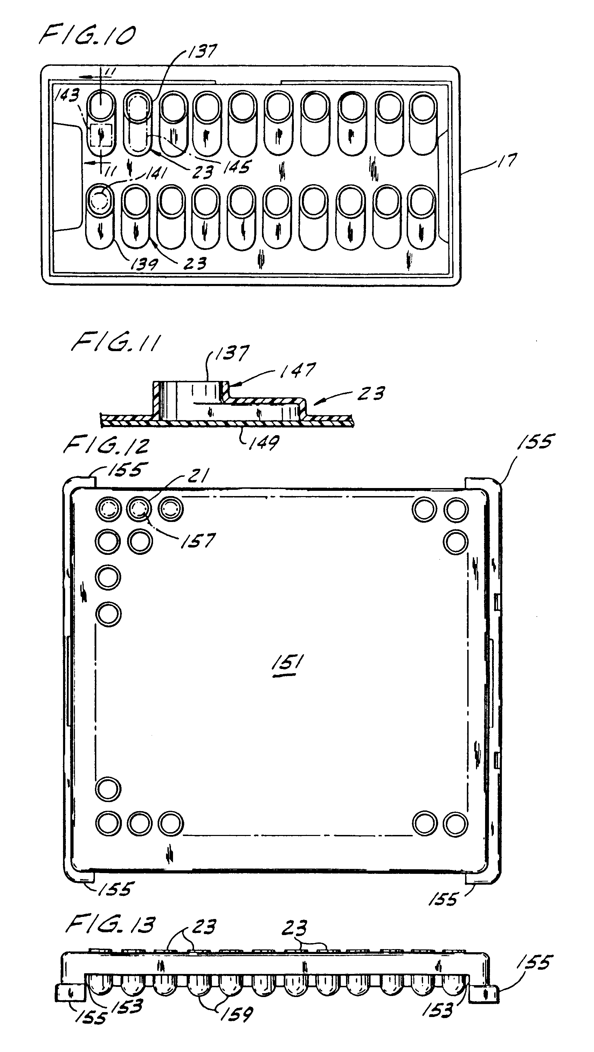

Referring now to Figure 1, there is shown an automated microbiological apparatus 11 of the present invention which includes an incubation chamber 13 for incubating a plurality of microbiological test trays, such as susceptibility and identification trays 15 and 17 (see Figures 12 and 10), carried in a common carrier 19 (Figure 1). As shown in Figures 12 and 10, susceptibility trays 15 and identification trays 17 each include a plurality of wells or cupules 21 and 23 respectively arranged in rows and columns. Referring back to Figure 1, common carriers 19 are manually placed through an access door (not shown) in a plurality of slots 25 in incubation chamber 13. Slots 25 are vertically disposed in an elevator 27 which is movable vertically in incubation chamber 13 by a belt driven screw drive 29, of which teflon coated drive screw 31 and precision stepper motor 33 are shown in Figure 1. Elevator 27 may include, by way of example, two rows of thirty slots so that it may accommodate up to sixty common carriers 19. By means of drive 29, any one of the slots 25 may be moved to the level of the lowermost slot shown in Figure 1 so that the common carrier 19 therein may be removed through an access port from the incubator for processing as discussed below. Temperature and humidity within incubation chamber 13 are tightly controlled by means of a number of sensors and a heater (not shown) and the humidifier discussed below.

More particularly, apparatus 11 also includes a housing 35 in communication via the access port with the interior of incubation chamber 13. Housing 35 houses an inspection station 37 and moving means 39 for transporting common carriers from slots 25 through the access port to the inspection station 37 and beyond as described below. A light source 41 is disposed above inspection station 37 and a pair of video cameras 43 are disposed below the inspection station. Alternatively, a pair of light sources may be used, one above each camera. A waste bin 45 is also provided inside housing 35 having a sensor system including a photodiode 46A and a photodetector 46B for detecting when bin 45 is full. Housing 35 also houses a dispensing head 47 for dispensing reagent into identification wells 23, and a flipper system including a pair of flipper forks 49 for removing identification trays or strips from common carriers 19.

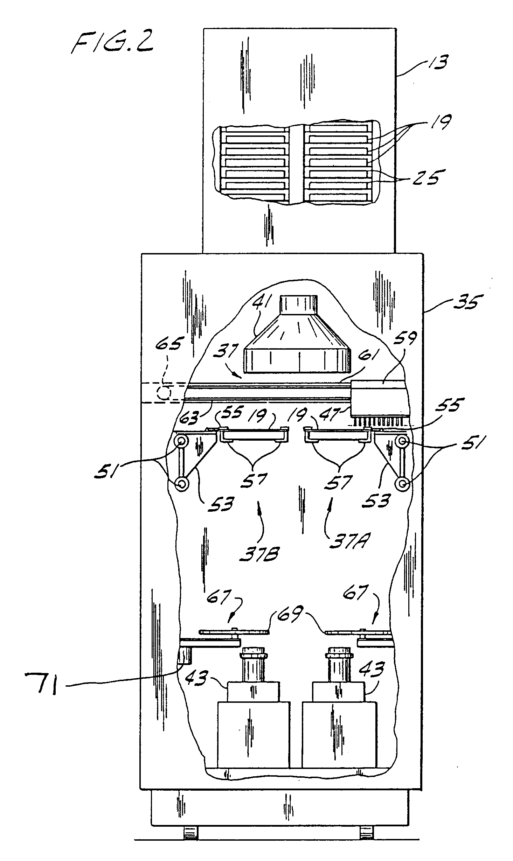

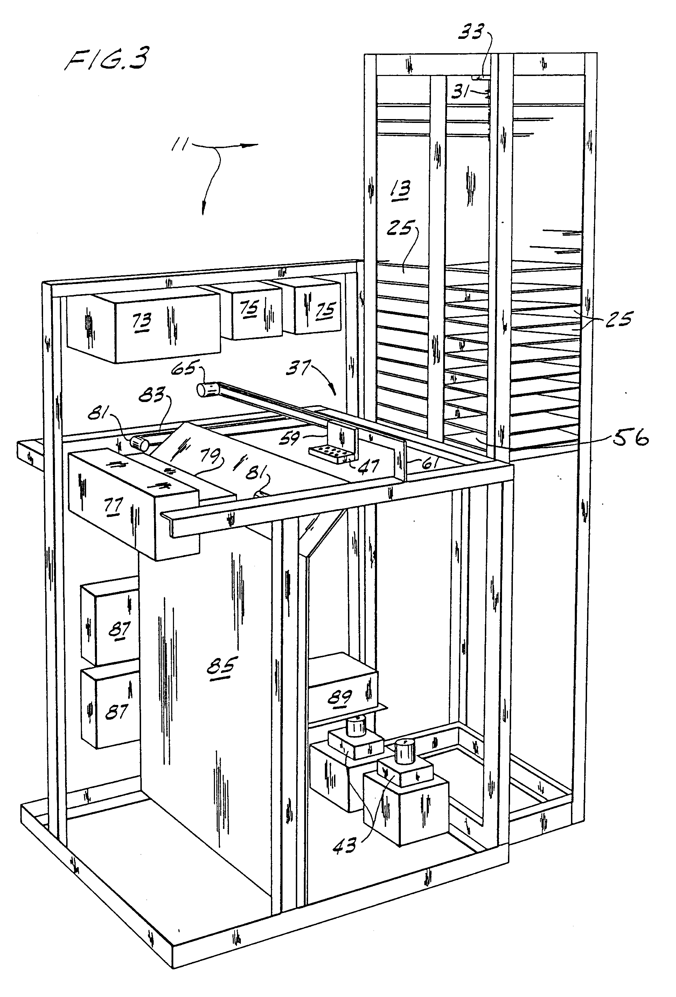

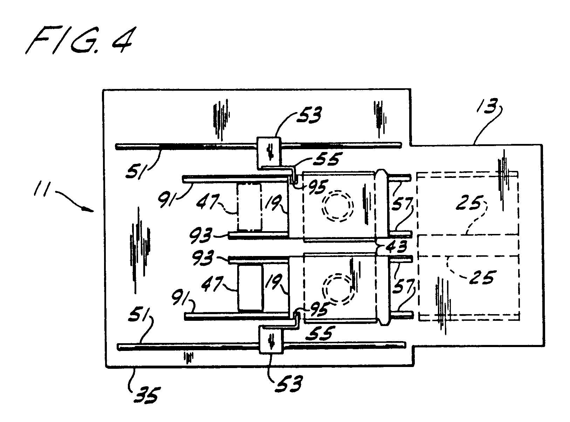

Turning to Figure 2, the two rows of slots 25 in elevator 27 are seen to be disposed side by side in incubation chamber 13. Carrier transporting means 39 includes a pair of tracks 51 upon each of which ride a separate motor driven carriage 53. Each carriage 53 carries a generally L-shaped rod 55 which is movable into a corresponding recess (see Figure 4) in common carrier 19 to move any desired carrier from its slot 25 in the incubation chamber through one of the pair of access ports 56 (Figure 3) to inspection station 37. Carriers 19 are moved from their slots to the inspection station along a second pair of tracks 57.

Dispensing head 47 which is disposed above tracks 57 on the opposite side of the inspection station 37 from incubation chamber 13, is carried by a carriage 59 along a track 61 by a belt drive 63 including a belt drive stepper motor 65. More particularly, dispensing head 47 is movable between the extreme position shown above the rightmost track 57 to a corresponding position generally to the left of the leftmost track 57 so that any reagent may be dispensed into any cupule of the identification tray of a common carrier on either track.

Although there are a pair of tracks 57 and a pair of cameras 43, it is possible to use a single light source 41 so long as cool and even illumination of the inspection area is achieved. It has been found that a cold cathode grip lamp equipped with a diffuser plate provides such illumination. Alternatively, a pair of such lamps equipped with diffuser plates may be used. For convenience, the inspection station can be divided into left and right halves 37A and 37B, respectively. Below inspection station 37A and between that inspection station and the corresponding camera 43 is a set of filters 67 suitably mounted for moving any of a plurality of filters to cover the field of view of camera 43. A similar set of filters is provided between inspection station 37B and rightmost camera 43. These filters can be mounted, for example, on a wheel 69 which is rotatable about its axis by a motor 71 so that the desired filter can be rotated into place as necessary. The filters can include colour separation filters, neutral density filters, and calibration devices. The placement of cameras 43 and filter wheels 69 is selected so that the largest tray likely to be encountered (e.g. a susceptibility tray) lies completely within the viewing field of the camera, and requires no further motion once it is positioned within the viewing field. Camera lens and camera to tray distance are optimized to maximize the size of the tray in the field and minimize optical distortion.

Turning now to Figure 3, in addition to the components of apparatus 11 mentioned above there is shown a signal processing and controlling unit 73 for processing the images from cameras 43 and controlling the various functions of apparatus 11. The signal processing part of unit 73 may include image processors such as those under the trade designation System 20,000H by Unitron Imagetek Systems of Plainview, New York; under the trade designation IP-512 by Imaging Technology, Inc. of Woburn, Massachusetts; under the trade designation Model 1000 by Image Technology Corporation of Deer Park, New York; under the trade designation Scan 78/99 of Eikonix Corporation of Bedford, Massachusetts; or under the trade designation Model 109RM by LogE/Spatial Data Systems of Goleta, California. Signal processing and controlling unit 73 not only analyses the images from cameras 43 but also, in the manner described below, determines from that analysis a partial test result for each well in a tray and a total test result or results for each tray. Immediately to the right of the signal processing and controlling unit 73 are shown two temperature controllers 75 for controlling the temperature inside apparatus 11 and particularly the temperature inside incubation chamber 13. Below signal processing and controlling unit 73 is a reservoir 77 which contains a plurality of (e.g. twenty) reagents as needed for dispensing into identification trays 17. Pumping of reagent from the reservoir to the dispensing head 47 is controlled by a set of reagent pumps or solenoids 79. To the right of reagent solenoids 79 and suitably mounted to opposite sides of the frame of apparatus 11 are a pair of precision stepper motors 81 for driving the common carrier carriages 53. More specifically, motors 81 each are operatively connected to a belt drive 83 to drive the corresponding carriage 53 along its track 51 as necessary to move common carriers from the incubation chamber to the inspection station and to the area beneath the dispensing head 47 are necessary. A barrier or bulkhead 85 is provided generally to the left of dispensing head 47 and inspection station 37 in Figure 3 to isolate waste bin 45 from the inspection station. Bulkhead 85 includes an inclined plane directly below dispensing head 47 so that wasted reagent (such as might appear during priming of the dispensing head) is directed into waste bin 45. A plurality of motor control drives 87 are provided to control the energization of motors 81 for the common carrier drive, of motor 33 for the elevator drive, of motor 65 for the dispensing head drive, and of motors 71 for the filter wheels, As will become apparent, signal processing and controlling unit 73 includes control circuitry for controlling the operation of apparatus 11 and in particular for controlling motor drives 87 to move the various components of the apparatus in a co-ordinated fashion as described below. For example, unit 73 may include a microcomputer suitably programmed to control the apparatus. Alternatively, hard-wired circuitry could be provided to perform the same function. A humidifier 89 is also provided to control the humidity in apparatus 11 and particularly the humidity in incubation chamber 13.

Turning now to Figure 4, each track 57 is seen to include a pair of rails 91 and 93 extending from the access ports adjacent incubation chamber 13 past the position of dispensing head 47. Rail 91 of each track extends beyond rail 93 to facilitate the disposal of carrier 19. Tracks 51 also extend generally from incubation chamber 13 generally to the opposite side of apparatus 11. Each common carrier includes a recess 95 in which a puller or grabber rod 55 may loosely rest to tow desired common carrier 19 from its corresponding slot 25 in the incubation chamber to the position shown in Figure 4 at the inspection station. By moving the appropriate carriage 53 further to the left as seen in Figure 4, common carrier 19 may be moved underneath the dispensing head 47. And, if desired, further motion of carriage 53 to the left in Figure 4 results in the common carrier falling off the end of rail 93 directly into waste bin 45.

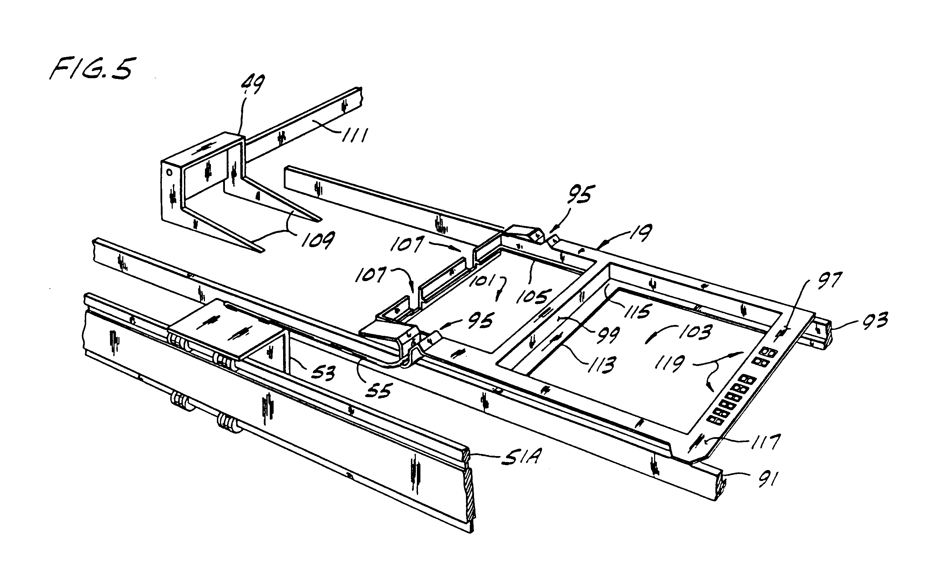

Common carrier 19 (shown in more detail in Figure 5) includes a generally rectangular frame 97 having a cross-bar 99 extending thereacross to define two central openings 101 and 103. Opening 101 is sized to receive an identification tray such as shown in Figure 10 while opening 103 is sized to hold one or more susceptibility trays 15 as shown in Figure 12. A ledge 105 above one-half way down in opening 101 along the perimeter thereof is provided to support an identification tray 17 in central opening 101. A pair of notches 107 are provided in the front wall of frame 97 to allow the tines 109 of fork 49 to remove an identification tray from central opening 101. Notches 107 extend below ledge 105 and the tines 109 are sloped rearwardly so that as carrier 19 is moved to the position of fork 49, the tines pass under the identification tray and lift it free of carrier 19. Between both forks 49 extends a striker flange 111 disposed generally at the top rear of the forks.

Similarly, central opening 103 includes a ledge 113 for supporting one or more susceptibility trays 15. A pair of positioning posts 115 extend up from ledge 113 to accurately and securely position a susceptibility tray in central opening 103. Common carrier 19 also includes an offset 117 extending generally out from the frame at the lower right-hand corner thereof as shown in Figure 5 for the purpose of ensuring that common carrier 19 is loaded into incubation chamber 13 with the proper orientation. Chamber 13 includes corresponding structure (not shown) which prevents the carrier from being inserted into a slot 25 if it is turned the wrong way. Also on the rightmost part of frame 97 is a set of recesses 119, each in the shape of the numeral "8" which are provided to accurately define the position at which the user writes down the patient or specimen identification information for the trays carried by that particular carrier 19. Recesses 119 also ensure that the identification number can be easily read by the image processing system of the present invention. Figure 5 also illustrates one of a number of alternative embodiments (this one labelled 51A) of track 51.

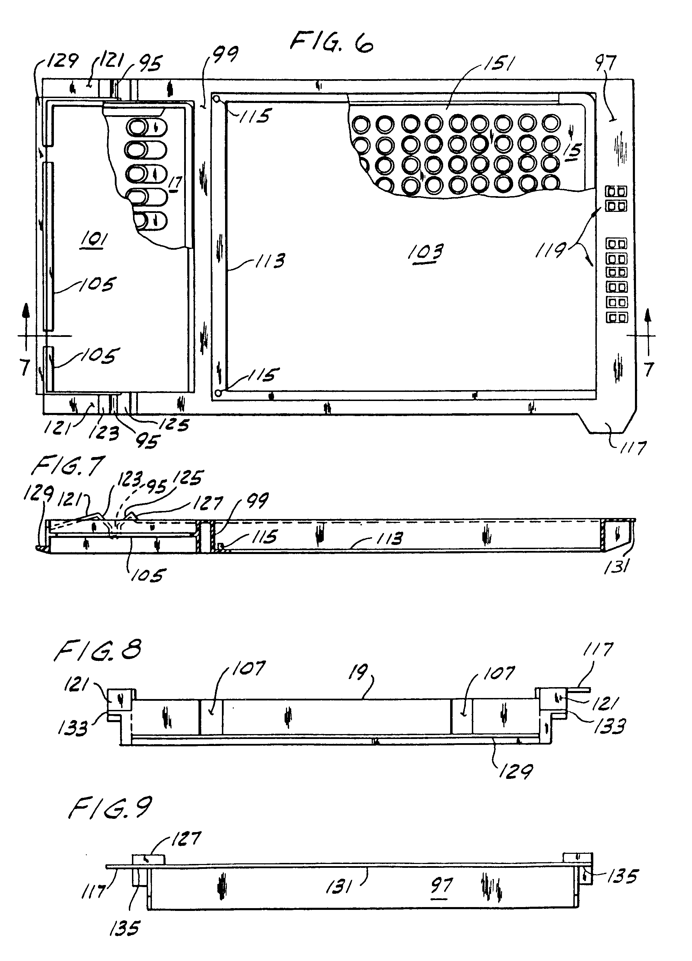

Looking now at Figures 6 and 7, frame 97 is seen to include an upwardly sloping front surface 121 up which rod 55 may slide if necessary (although it is preferred that such sliding not be necessary) as it is pushed into a slot 25 in incubation chamber 13. At the uppermost extent of ramp 121, a descending ramp 123 is provided which terminates in recess 95. Another upwardly extending ramp 125 is disposed at the rear of recess 95 and it terminates in a descending ramp 127 which descends to the general level of the top of frame 97. Also shown in Figure 6 is a portion of susceptibility tray 15 in central opening 103 and a portion of identification tray 17 in central opening 101. Frame 97 also includes a front lip 129 disposed generally at the bottom of the frame. In Figure 7, cross-bar 99 is seen to be generally C-shaped and the recesses 119 are positioned on the upper surface of a ledge 131 of carrier 19.

Frame 97 (Figure 8) has a pair of shoulders 133 at the front which extend out from the body of the carrier and provide the front surface from which ramp 121 inclines. Similarly, the rear view of carrier 19 (Figure 9) reveals that frame 97 also defines a surface or shoulder 135 for supporting carrier 19 as it is moved along tracks 57.

An identification tray 17 (Figure 10) suitable for being carried in central opening 101 of carrier 19 includes a pair of rows of wells or cupules 23 arranged in columns. The cupules may contain different reagents, some of which are dispensed therein by dispensing head 47, for identifying various micro-organisms. Each cupule includes a generally circular open or aerobic portion 137 and a generally closed or anaerobic portion 139 in fluid communication with portion 137. Cupules 23 are in fact chambers where reactions take place between the reagent therein and the particular sample which has been innoculated into each cupule, which reactions can identify the particular micro-organism present in the sample. However, not each reaction has the same result. In some reactions, a result would appear only in section 137, which is exposed to air. Other reactions might occur only in the anaerobic portion 139 of the cupule. Still other reactions might be present in both parts of the cupule. Such reactions can involve colour change, turbidity change, or the formation of a product of some generally predetermined shape. Thus, for any given cupule it may not be necessary to analyse the entire cupule. It may be that an area of interest 141 in section 137 would be the only area of that cupule whose image would need to be processed. Similarly, for other reactions an area of interest 143 in the closed section 139 of cupule 23 may be all that is required. In still other reactions, an area of interest 145 extending through both the aerobic and anaerobic sections of the cupule may be needed. Other possible areas of interest in terms of shape, placement, and size could be needed or desired depending upon the reactions involved.

Cupule 23 (Figure 11) includes a raised neck 147 in the area of section 137 and is preferably formed out of a single layer of transparent, relatively rigid plastic material. The base of cupule 23 is formed by a transparent substrate 149 common to all the cupules.

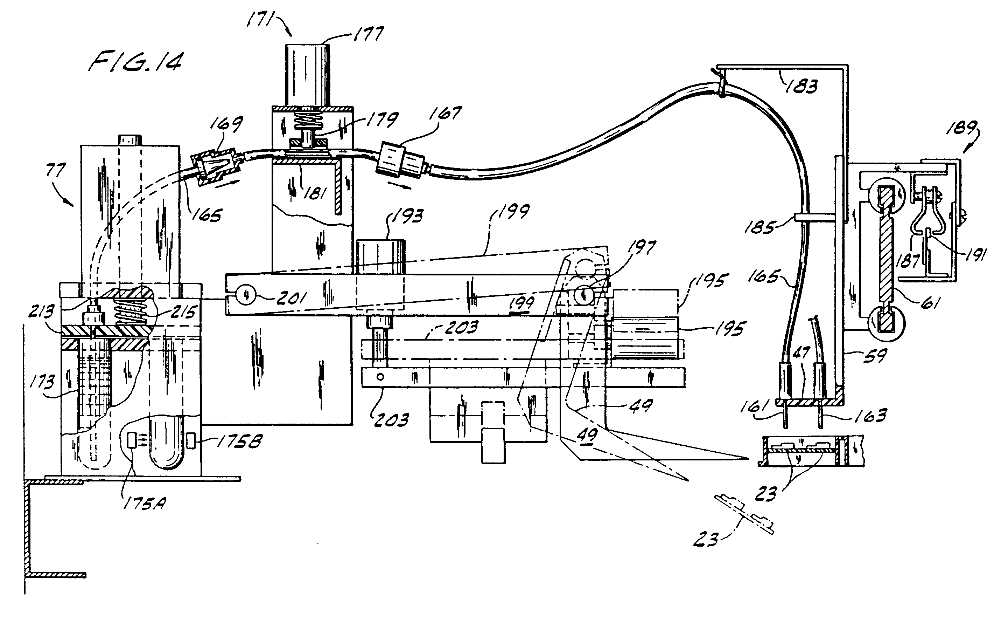

Turning to Figure 12, susceptibility tray 15 includes a large number of wells 21 arranged in rows and columns. Wells 21 are disposed in a relatively flat sheet 151 of rigid plastic material having depending shoulders 153 (Figure 13). Along two sides, shoulder 153 is extended outwardly and downwardly in a flange 155 having a wall thickness sufficiently small to fit between positioning post 115 and frame 97 of the carrier (Figure 6). An area of interest 157 for any wells 21 could be generally of the same outline as the well itself, since in susceptibility testing one is normally looking for a turbidity change which will be present throughout the entire well. Other areas of interest could, of course, be used. Wells 21 (Figure 13) have a convex bottom surface 159 which tends to magnify the contents of well 23 when that well is viewed from below as seen in Figure 13.

The reagent dispensing and identification tray removing features of the present invention are illustrated in more detail in Figure 14. Dispensing head 47 includes two rows of reagent dispensing nozzles 161 and 163 for dispensing reagent into cupules 23. The identification tray can be positioned by rod 55 as described above so that the aerobic portions of cupules 23 are disposed directly underneath nozzles 161 and 163. Each nozzle of each row is connected by a flexible tube 165 (only two of which are shown) through a pair of one-way valves 167 and 169 and a pumping mechanism 171 to a bottle 173 of the appropriate reagent. Assuming there are twenty nozzles, up to twenty different reagents may be dispensed into any of the cupules by appropriate placement of dispensing head 47.

Each reagent bottle 173 may have associated therewith a sensor 175 for detecting when the reagent bottle is effectively empty. Such a sensor 175 is illustrated in Figure 14 as a photosensor having a light source 175A and a photodetector 175B. Other sensors could of course be used. Assuming reagent is present in reagent bottle 173, it is pumped by a pumping mechanism 171 (each tube and associated reagent has its own pumping mechanism 171) through tube 165 to the corresponding nozzle 161 or 163. Pumping mechanism 171 includes a solenoid 177 with a plunger 179 disposed on one side of tube 165 while on the other side of tube 165 is a flange 181 against which tube 165 can be compressed by plunger 179 when solenoid 177 is energised. The operation of solenoid 177, is, of course, under the control of control circuitry 73. Each time solenoid 177 is energised it forces a predetermined amount of reagent out of tube 165. Note should be taken that tube 165 is normally open and that dispensing of reagent occurs only when the tube is closed or compressed by solenoid 177. This feature is made possible by the presence of the two one-way valves 167 and 169 which may be duck-bill valves.

As a result of this arrangement, an accurate amount of reagent is dispensed with each operation of solenoid 177 and drops from tube 165 are prevented from falling from the dispensing head after the solenoid is deenergised.

Each tube 165 is suspended above fork 49 by a strap 183 secured to carriage 59. Carriage 59 also includes a spacer 185 to hold tubes 165 secure as dispensing head 47 is moved. Carriage 59 also suitably supports a magnet 187 which moves along with carriage 59 as it is moved along track 61. Disposed adjacent track 61 but fixed with respect thereto is a sensor support 189 which fixably support a series of Hall-effect sensors 191 (only one of which is shown) which determine when the dispensing head 47 is properly positioned above an identification tray (assuming the identification tray is in the position shown in Figure 14) to dispense the desired reagent into the desired cupule.

The system for removing and dumping identification trays includes not only fork 49 but also a pair of solenoids 193 and 195. Fork 49 is rotatably mounted on a rod 197 extending therethrough at its upper end. Rod 197 defines an axis about which fork 49 is pivotable. Rod 197 is fixedly secured to a rigid beam 199 of a pair of generally parallel beams 199 at one end of said beams. The other end of beams 199 is pivotally mounted on a second rod 201.

The plunger of solenoid 193 is fixedly connected to one end of a lifter bar 203 which has solenoid 195 secured to the other end thereof. Lifter bar 203 is constrained to move only vertically, so that when solenoid 193 is energised, it raises lifter bar 203 and solenoid 195 to the positions shown in phantom in Figure 14. This also causes fork 49 to be pushed upwardly without rotation of the fork, which results in beam 199 pivoting around rod 201 to the position shown in phantom in Figure 14. If the tines of fork 49 are under an identification tray at the time solenoid 193 is energised, energisation of that solenoid will therefore result in the fork and the identification tray being moved upward an amount sufficient to lift the tray free of carrier 19. Subsequent energisation of solenoid 195 causes its plunger to strike striker flange 111 between the forks, forcing both forks to pivot about the axis of rod 197 to the position shown in phantom in Figure 14. In this position, identification tray 17 falls free into waste bin 45. Thus, to remove an identification tray from a common carrier 19, the tray is first moved by tray transporting means 39 to the position somewhat to the left of that shown in Figure 14 in which the tines of fork 49 enter through the notches in the front wall of common carrier 19 and pass under identification tray 17. Once the common carrier is in this position, solenoid 193 is energised which lifts the identification tray free of the carrier. Then carrier transporting means 39 is energised to move the common carrier back to the position shown in Figure 14 or beyond and solenoid 195 is energised to discard the identification tray as shown in Figure 14.

Turning now to Figure 15, reagent reservoir 77 is seen to include a mounting plate 205 slidingly disposed in a pair of end plates 207 (only one of which is shown). A stationary alignment plate 209 is disposed directly above mounting plate 205 and contains a plurality of openings therethrough centered directly above the reagent bottles 173. A movable top plate 211 is also slidingly secured to end plates 207. Top plate 211 has a plurality of draw tubes 213 secured thereto which fit through the openings in alignment plate 209 for passage into reagent bottles 173. Each draw tube 213 is suitably connected to its corresponding tube 165. This particular construction of reagent reservoir 77 allows the reagent bottles to be removed as a module or unit for replacement, thereby minimizing downtime of the apparatus. This removal and replacement is easily accomplished by moving top plate 211 up with respect to end plates 207 to the position shown in Figure 15 and then sliding reagent mounting plate 205 along with the reagent bottles to left as shown in Figure 15 to remove the entire module from the reservoir. A filled reagent module can then be inserted in its place and top plate 211 moved back down to the position shown generally in Figure 14. A spring 215 is provided to bias top plate 211 upwardly and to cushion the relative motion between top plate 211 and the reagent module. In addition, a latch 217 is provided to latch the top plate in the operating position shown in Figure 14.

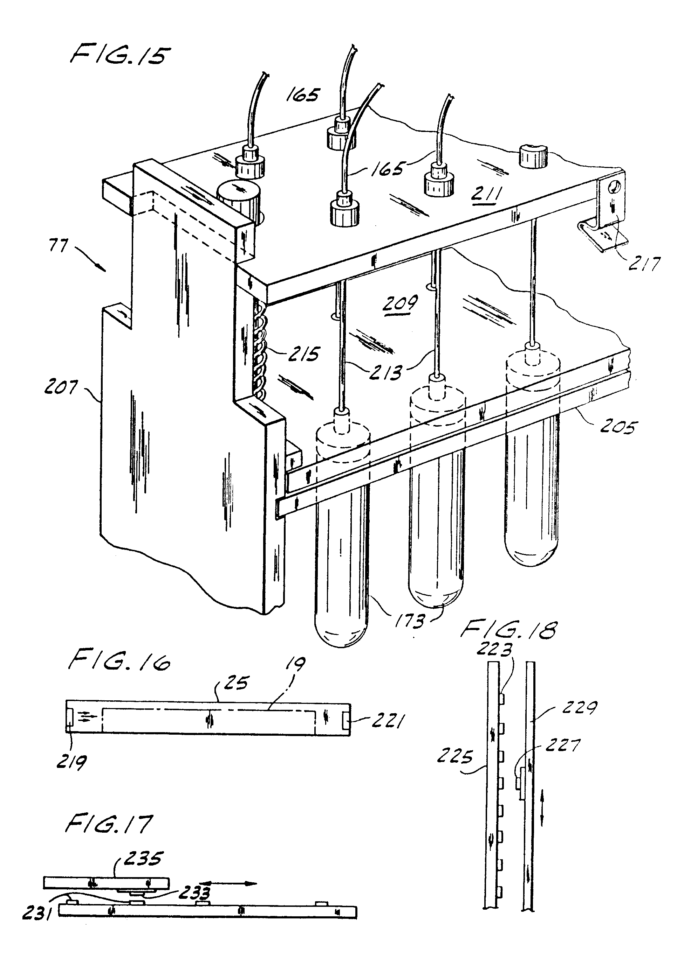

Turning now to Figure 16, a slot 25 in incubation chamber 13 is shown with a photoelectric sensor consisting of a light source such as a photodiode 219 on one side of the slot and a photodetector 221 on the other side of the slot. When a common carrier 19 is present in the slot as shown in phantom in Figure 16, the light from photodiode 219 is prevented from reaching photodetector 221, but when the common carrier is not present the light from the photodiode can fall on photodetector 221. Thus, the combination of photodiode 219 and photodetector 221 comprise a sensor for sensing the presence of a common carrier in the particular slot 25 associated with that photodiode and photodetector. Each of the 60 slots has a photodiode/photodetector combination so that the control circuitry can determine at all times which slots contain common carriers and which slots are empty.

The control circuitry must not only know which slots are empty but also must know the position of elevator 27 in incubation chamber 13 since common carriers can be removed from the incubation chamber only when their particular slot is at the level of the corresponding access port as shown in Figure 2. The control circuitry determines the position of the elevator by means of a series of 30 Hall-effect sensors 223 (Figure 18) fixedly secured to a flange 225 which is stationary with respect to the housing of incubation chamber 13. A magnet 227 is suitably mounted on a member 229 which moves with elevator 27. There is a sensor 223 corresponding to each of the slots 25 in a row so that as elevator 27 is raised or lowered the Hall-effect sensors detect the magnet as the magnet is moved to each slot position. In this way the control circuitry can accurately determine which slot is present at the access ports, so that its common carrier can be removed from the incubation chamber by the carrier transporting means 39. The use of precision stepper motor 33 also helps provide accurate control of the position of the elevator.

Similarly, a series of Hall-effect sensors 231 are fixedly secured with respect to track 57 and represent possible desired positions of the common carrier. Such desired positions of the common carrier could include at the inspection station, at the dispensing head and the position at which the identification tray is removed by fork 49 from the carrier. A magnet 233 is suitably mounted to a flange 235 which moves with carrier 53. The position of magnet 233 thus accurately represents the actual position of the common carrier. Accurate positioning of the carriers is also achieved by the use of precision stepper motors 81.

The operation of apparatus 11 is as follows:

The user of apparatus 11 would first innoculate identification tray 17 and susceptibility tray 15 in the ordinary manner. These trays could be placed in common carrier 19 either before or after innoculation with the sample to be tested. The user would write an identifying number in recesses 119 on the common carrier and insert the common carrier into an empty slot 25 in incubation chamber 13. To insert the carrier into an empty slot the user must open the access door (not shown). All doors of apparatus 11 are normally locked and are under the control of controlling unit 73. To open the elevator access door, the user would press a door request switch. In response unit 73 would unlatch all doors as soon as any critical operation occurring at the time was completed. Such critical operations would include any movement of transporting means 39, the reading of any tray by the video cameras, the addition of reagent to the cupules, and the development of colour in the cupules. This latching feature, implemented in the software of unit 73, prevents operator errors such as the insertion of a carrier into a slot whose occupant is at the inspection station, the changing of a reagent which is about to be dispensed, or the removing of the waste bin (biohazard bag) at a point when a carrier is about to be discarded.

Control circuitry 73 by means of the photodiode 219 and photodetector 221 associated with the slot in which the carrier was just inserted would determine that a common carrier has been inserted into that particular slot 25. The control circuitry thereupon directs motor 33 to drive elevator 27 to the proper level so that the newly inserted tray 19 may be removed from slot 25 and taken to inspection station 37. Once the desired slot reaches the access port at which it can be removed and taken to the inspection station, it is indexed down by stepper motor 33 one-half step so that the hook or rod of the carrier transporting means can be moved into the incubation chamber and placed directly over groove 95. The elevator is then moved one-half step upwards so that the groove in the carrier is engaged by the hook of the transporting means. The hook is then moved to the left as shown in Figure 1, thereby towing the desired common carrier along tracks 57 to the inspection station. Once the carrier reaches the inspection station as precisely revealed by the appropriate magnet 231 and Hall-effect sensor 233, the number written on the tray is read. This reading is accomplished by processing the image of the tray made by camera 43. More specifically, the control circuitry and image processing circuitry is programmed so that in this mode of operation its only areas of interest correspond to the line segments of recesses 119. The image processing system considers only those particular line segments. By determining whether a particular line segment has been written on (by examining the light level coming through that particular segment) it can readily determine the particular identification number written in recesses 119. In a similar fashion, the control circuitry can identify the particular type of identification and susceptibility trays present in common carrier 19 by examining the area of interest corresponding to a product code for that particular tray. For example, the susceptibility tray shown in Figure 12 has the product identification legend "MIC" stamped thereupon. By examining areas of interest corresponding to the various segments which make up this legend, control circuitry 73 can identify the type of tray. The various kinds of identification trays can be similarly identified. After identification of the trays and the specimen number, the carrier is returned to its slot by transporting means 39 and the elevator is indexed down one-half step. Moving the elevator down one-half step results in rod 55 being freed from slot 95 in the carrier. Rod 55 is then moved out of the incubation chamber and the elevator is indexed back up.

To process the images of the numbers written in recesses 119 and the images in the wells and cupules as discussed below, image processing and controlling unit 73 requires uniformity in lighting over the inspection station 37. In part, this is achieved by the particular light source 41 described above. In addition, the image processor also has recorded the background light level at each point or pixel in the areas of interest, which will account for any variability in the light source. In addition, in reading the results of various trays, it may be desirable at times to compare the result of the image processing for any particular well after incubation with that processed image taken generally before incubation occurs. For this reason, at some initial time T-zero such as thirty minutes after the carrier is inserted into the incubation chamber, the common carrier it is desired to test is again moved by the elevator to the corresponding access port and from there moved by transporting means 39 to the inspection station. Because of the presence of the position sensing mechanism of Figure 18, the tray is accurately and repeatably positioned in the same position at inspection station 37 each time. Such accuracy is also assured by the use of a stepper motor to drive transporting means 39. Image processing and controlling unit 73 thereupon begins taking baseline readings for each of the cupules and wells contained in the trays and carrier 19 at the inspection station. The image processing and controlling unit 73 looks at each cupule and well sequentially and more particularly considers the image only within the area of interest for each particular cupule and well. Unit 73 can be programmed to set the particular size, shape and placement of the areas of interest so that different trays with different tests may be read with the same apparatus 11. Once the apparatus identifies the particular type of tray as described above, it then sequentially inspects the areas of interest that have been previously defined for that particular tray. For example, the identification tray shown in Figure 10 has three exemplary areas of interest shown in three different cupules. Other trays might have areas of interest of different sizes and/or shapes and these areas of interest may or may not vary from cupule to cupule for a particular tray. Image processing and controlling unit 73 thus looks at the area of interest for one cupule and records the results, then looks at the area of interest for the next cupule and records the results, and so on until all the cupules have been examined. The wells of susceptibility tray 15 (Figure 12) are sequentially examined in a similar manner at the appropriate time.

The output of video camera 43 is a voltage for each picture element or pixel in the areas of interest. The image processing and controlling unit is programmed to count the number of pixels in a given area of interest whose associated voltage exceeds a particular threshold. For example, in an imaging system capable of resolving 246 grey levels from black to white, where black is full voltage and white is zero voltage, there would be associated with each area of interest a threshold voltage value which discriminates between a positive and negative result for the particular well. The baseline measurements being taken, therefore, represent the number of pixels in each area of interest that have an associated voltage greater than the predetermined threshold. This baseline value is used later by the image processing and controlling unit to determine the actual change in a well after incubation period. After the baseline values are taken, the carrier is returned to the incubation chamber as described before and incubation of the trays is resumed.

Image processing and controlling unit 73 has preprogrammed information concerning the incubation times for the various types of trays which may be used therewith. Since the unit has identified the particular trays as to type in any carrier as described above, it can and does set the incubation period for each tray. Typical incubation time might be five hours for an identification tray and 24 hours for a susceptibility tray. After the five hours of incubation for a particular identification tray have expired, the common carrier carrying that particular tray is again moved to the position in which the transporting means 39 can remove that carrier from the incubation chamber. If in fact the identification tray is one of those which requires the addition of reagent from dispensing head 47 after incubation, controller 73 then moves the common carrier by means of transporting means 39 to the position shown in Figure 14. If it is not already present, the dispensing head 47 is moved under the control of controller 73 to the proper position over identification tray 17. It may be that more than one reagent is desired in any given cupule of identification of tray 17. This is accomplished by positioning the dispensing nozzle corresponding to one of the desired reagents above the cupule, pumping the desired reagent into the cupule, and then moving the dispensing head again to position the dispensing nozzle of the desired second reagent over the cupule. The second reagent is then pumped into the cupule as well. Use of the stepper motor and Hall-sensors as discussed above allows this precise placement of dispensing head 47. After dispensing any desired reagents into the proper cupules of identification tray 17 and waiting the appropriate time for any reaction(s) to occur, controller 73 causes carrier 19 to be moved by transporting means 39 back to the inspection station. For certain tests, it may be necessary to move the identification tray back to the inspection station after reagent is added to each cupule. For others, it may be possible to wait until reagents have been added to all cupules before the carrier is moved to the inspection station for reading. At the inspection station, the image processing and controlling unit again examines the areas of interest in each desired cupule of the identification tray. Because the results of some identification tests may involve colour changes, controller unit 73 may control the appropriate filter wheel 69 to examine a particular cupule one or more times using one or more filters to determine if that colour change has in fact taken place. For each cupule and more specifically for each area of interest within a cupule, the image processing and controlling unit determines the number of pixels in that area of interest which have an associated voltage exceeding the predetermined threshold for that area of interest. If that number pixels exceeds a predetermined number, a positive result is assigned to that cupule. Alternatively, a positive result could be assigned to a well or cupule if the average grey level (voltage) of the area of interest exceeded some predetermined threshold. These cupule results are called binary partial results since they represent only whether a particular reaction has taken place in a particular cupule. The image processing and controlling unit them analyses the binary partial results from the cupules to determine the possible identity of the micro-organism in the sample. This determination is made by comparing the partial binary results from this particular identification tray with prerecorded patterns of results for such identification trays. If the pattern of binary partial results does not corresponding to a known pattern, i.e. if the pattern of results is illogical in some way, the image processing and controlling unit causes the carrier to be returned to the elevator and a warning message to be displayed to the user that that particular identification tray should be read manually. On the other hand, if the pattern of results for the identification tray is logical, the probable identification of the micro-organism is recorded by image processing and controlling unit 73 and the common carrier is moved to the position where the fork can remove the identification tray and dispose of it into waste bin 45. The common carrier with its susceptibility tray still intact is then returned to the incubation chamber for additional incubation.

After the incubation of the susceptibility tray is complete, the common carrier carrying the susceptibility tray is again moved to the inspection station where it is read in a similar manner to that of the identification trays. In the case of the susceptibility tray, however, there will be a series of results which represent the various antimicrobial agents to which the micro-organism is susceptible and the required concentration of that antimicrobial agent. These results are again stored by image processing and controlling unit 73. After the reading of the susceptibility tray, the transporting means 39 pulls the common carrier and susceptibility tray along its track 57 until the common carrier with the tray fall off shorter rail 93 into waste bin 45. Solenoid 193 is energised during this operation to remove fork 49 from the path of the carrier.

Thus, it is seen that apparatus 11 in a fully automated way incubates reads and disposes of identification and susceptibility trays while recording the results of those tests for later use. Other types of trays could of course be read in a similar manner by apparatus 11, including various biochemical trays and any other tray which would show a predictable reaction change in an area of interest.

## Claims

1. A microbiological testing apparatus comprising an incubation chamber (13) for incubating a plurality of microbiological trays, each tray having a plurality of wells; an inspection station (37) at which the test trays may be inspected; means for moving (29,39) any predetermined test tray as desired from the incubation chamber (13) to the inspection station (37) characterised in that said means for moving includes track means (57) and at least one carrier (19) capable of carrying one test tray in a first location (101) therein and one test tray in a second location (103) therein; removing means (49) capable of removing the test tray from said first location without removing the test tray from said second location; the apparatus including means including a video camera (43) for producing an image of test trays at said inspection station (37) and means for processing (73) said image to determine test results.

2. Apparatus according to Claim 1, characterised thereby that the incubation chamber (13) is disposed vertically, with the trays being stackable therein one above another, and said moving means (29, 39) includes an elevator (27) for moving predetermined test trays to a level corresponding to the inspection station (37).

3. Apparatus according to Claim 2, characterised thereby that said moving means (29, 39) further includes means (51, 53) for moving a tray located in the incubation chamber (13) at the level corresponding to the inspection station (37) from the incubation chamber (13) to the inspection station (37).

4. Apparatus according to Claim 2 or Claim 3, characterised thereby that at least one stack of trays is disposed in the elevator (27), the stack being movable by the elevator (27) to present predetermined test trays at the level corresponding to the inspection station (37).

5. Apparatus according to Claim 2, 3 or 4, characterised thereby that the trays are disposed in at least two stacks in the incubation chamber.

6. Apparatus according to any preceding Claim, further including means (89) for controlling the humidity in the incubation chamber (13).

7. Apparatus according to any preceding Claim, further including sensing means (223, 227) for determining the position of the elevator.

8. Apparatus according to Claim 7, characterised thereby that the sensing means (223, 227) includes a Hall-effect sensor.

9. Apparatus according to any preceding Claim, characterised thereby that the trays are disposed in slots (25) in the elevator (27) and further including sensing means (219, 221) for detecting whether a slot is occupied by a tray.

10. Apparatus according to Claim 9, characterised thereby that the sensing means (219, 221) includes a photodiode sensor.

11. Apparatus according to any one of the preceding Claims, characterised thereby that said track means includes at least two parallel rails (51).

12. Apparatus according to Claim 11 further including sensing means (231, 233) for determining the position of the trays on the track means.

13. Apparatus according to Claim 12, characterised thereby that the sensing means (231, 233) includes a Hall-effect sensor.

14. Apparatus according to Claims 11 - 13, further including a plurality of said carriers (19) for carrying one or more trays each, said carriers (19) being movable along the track means (51).

15. Apparatus according to anyone of the preceding Claims, characterised thereby that the removing means (49) includes means (109) for lifting the tray from the carrier.

16. Apparatus according to any one of preceding Claims characterised thereby that the moving means (29, 39) further includes pulling means (53) engageable with a carrier (19) to transport the carrier along the track means (51).

17. Apparatus according to Claim 16, characterised thereby that the pulling means (53) includes a bar (55) engageable in a recess (95) of a carrier (19).

18. Apparatus according to any preceding claim, further including a waste bin (45) into which a tray may be dumped after the results for that tray are determined.

19. Apparatus according to Claim 18, further including means (46A, 46B) for signalling when the waste bin (45) is full.

20. Apparatus according to any preceding Claim, further including dispensing means (77, 171, 47) for delivering reagents to the trays.

21. Apparatus according to Claim 20, further including a reagent station, a tray being movable from the incubation chamber to the dispensing station.

22. Apparatus according to Claim 20 or Claim 21, characterised thereby that the dispensing means includes a plurality of reagent sources (173) and a set of tubes (165) extending respectively from the plurality of reagent sources (173) to a dispensing head (47).

23. Apparatus according to Claim 22, characterised thereby that the dispensing means includes means (171) for moving fluid through said tubes (165) to dispense reagent therefrom.

24. Apparatus according to Claim 22 or Claim 23, characterised thereby that the dispensing means further includes valve means (169) for providing one way flow through said tubes (165) and preventing dripping therefrom.

25. Apparatus according to Claim 24, characterised thereby that the valve means (169) includes a double-duckbill valve for each of said tubes (165).

26. Apparatus according to any one of Claims 23 to 25, characterised thereby that the means (171) for moving fluid through said tubes includes a solenoid (177) associated with each of said tubes (165) which is operable to dispense a predetermined amount of reagent.

27. Apparatus according to any one of Claims 22 to 26, further including sensing means (175A, 175B) for determining when the quantity of a reagent falls below a predetermined level.

28. Apparatus according to any one of Claims 22 to 27, characterised thereby that one or more of said reagent sources is a replaceable module.

29. Apparatus according to any one of Claims 22 to 28, characterised thereby that the moving means (29, 39) includes two parallel rails (51), and the dispensing means includes a dispensing head (47) mounted generally above one of said rails and means (59)are provided for moving the dispensing head from one rail to the other of said rails.

30. Apparatus as set forth in Claim 29 , characterised thereby that the means for moving the dispensing head includes a third rail (61) disposed above and generally at right angles to said pair of rails (51).

31. Apparatus according to any one of the preceding Claims, characterised thereby that said carrier (19) includes a template (119) to facilitate the manual entering of identifying information on said carrier, the identifying information being readable by said image processing means.

32. Apparatus according to any one of the preceding Claims, further including a light source (41) for causing light to shine through test trays at the inspection station.

33. Apparatus according to any one of the preceding Claims characterized thereby that either the video camera (43) or the light source (41) is disposed above the inspection station and the other is disposed beneath the inspection station.

34. Apparatus according to Claim 32 or 33, characterized thereby that the light source (41) is a cold cathode lamp.

35. Apparatus according to any one of Claims 32 to 34, characterized thereby that the light source (41) includes a diffuser plate to distribute light substantially equally over the inspection station.

**36.** Apparatus according to any one of the preceding Claims, further including filtering means (69) for selectively filtering the light received by the video camera to determine colours present in at least some of the wells.

**37.** Apparatus according to Claim 36, characterized thereby that the filtering means (69) also includes a neutral density filter.

**38.** Apparatus according to Claim 36 or Claim 37, characterised thereby that the filtering means (69) is disposed on the same side of the inspection station as the video camera (43).

**39.** Apparatus according to Claim 38, characterised thereby that the filtering means (69) and the video camera (43) are disposed beneath the inspection station (37).

**40.** Apparatus according to Claim 1, wherein said carrier (19) comprises a relatively rigid frame (97) defining one or more central openings (101, 103) for receiving the microbiological test tray; said frame having a pair of opposed, parallel shoulders (133, 135) and detent means (95), said moving means (29, 39) further including a pair of parallel rails (91, 93) and driving means (55) whereby said parallel shoulders (133, 135) of said frame (97) are suitable in use for riding on said parallel rails (91, 93); of said moving means (29, 39) and said detent means co-operate with the driving means (55) to move the frame (97) along said rails.

**41.** Apparatus according to Claim 40, characterised thereby that the frame (97) defines two openings (101, 103) separated by a cross bar (99), each opening being suitable for receiving a tray.

**42.** Apparatus according to Claim 41, characterized thereby that the openings (101, 103) are sized to accommodate two different trays.

**43.** Apparatus according to Claim 41 or Claim 42, further including access means integrally formed in the frame to permit only one of the trays to be removed from the carrier means (19).

**44.** Apparatus according to Claim 43, characterised thereby that the access means includes two slots (107) extending downwardly from the upper edge of the frame.

**45.** Apparatus according to any one of Claims 41 to 44, characterised thereby that the frame includes one or more projections (115) to hold at least one of the trays in position.

**46.** Apparatus according to any one of Claims 40 to 45, characterised thereby that the frame (97) includes means (117) integrally formed therewith and extending generally out from one side of the frame for providing a preferred orientation for the carrier.

**47.** Apparatus according to any one of Claims 40 to 46, characterised thereby that the detent means (95) includes a recess formed in one of the pair of shoulders of the frame.

**48.** Apparatus according to Claim 47, characterised thereby that the frame includes an upwardly extending ramp (121) disposed adjacent the recess.

**49.** Apparatus according to Claim 47 or Claim 48, characterised thereby that said pair of shoulders both include a recess.

**50.** A method of automatically analysing tests prepared in microbiological test trays such as susceptibility trays and identification trays, the trays each having a plurality of wells, comprising the steps of making an image with a video camera of a tray to be read; electronically analysing only predetermined areas of interest in the image made by the camera, which areas of interest are substantially within the outlines of the tray wells; for each well of interest, electronically determining whether an area of interest therein has an associated value that exceeds a predetermined threshold for that area of interest; and electronically assigning a binary partial result to each well based upon whether a predetermined threshold for each corresponding area of interest is exceeded characterised in that the tests are prepared in an identification tray and a susceptibility tray which are each mounted in a common carrier and the common carrier is automatically moved to an inspection station where one of the test trays is electronically analysed at a first predetermined time and removed from the carrier, and the other test tray is then electronically analysed at a later, second predetermined time.

**51.** A method according to Claim 50, characterised thereby that the step of analysing predetermined areas of interest includes analysing areas for at least two different wells in a tray which differ in shape.

52. A method according to Claim 51 or Claim 52, characterised thereby that at least two wells of interest have different predetermined thresholds.

53. A method according to any one of Claims 50 to 52, including the further step of interposing at least one optical filter between a tray in the inspection station and the video camera so that the binary partial result for at least one well of interest may represent whether a colour change has occurred in the well.

54. A method according to any one of Claims 50 to 53, characterised thereby that the trays have an identifying product symbol thereon and further including the step of electronically determining the particular type of tray present at the inspection station by processing the image generated by the video camera of the identifying product symbol on the tray.

55. A method according to Claim 54, characterised thereby that the determining step includes electronically analyzing the images only at predetermined areas where the product symbol is located.

56. A method according to any one of Claims 50 to 55, characterised thereby that the tray includes a position for manually writing thereon, and further including the step of electronically reading the writing by processing at least one predetermined area of interest in the image corresponding to the position of the writing.

57. A method according to Claim 56, characterised thereby that the position of the writing in the image includes a plurality of areas of interest for each symbol of the writing and said step of electronically reading the writing includes electronically reading each symbol.

58. A method according to any one of Claims 50 to 57, characterised thereby that the determining step includes determining the number of pixels in the area of interest that have a voltage which exceeds a predetermined voltage and assigning a binary partial result to each well based upon the number of pixels that exceed the predetermined voltage.

59. A method according to any one of Claims 50 to 58, further including the step of storing a background light level for each pixel at least in the areas of interest to account for spatial variability of the light.

60. A method according to any one of Claims 50 to 59, characterised thereby that said step of preparing the tests includes incubating the trays for a predetermined time and further includes the step of analysing a video image of the tray before significant incubation thereof to determine baseline values for that tray.

61. A method according to Claim 60, further including the step of comparing the baseline values for each well with values of each well after incubation.

62. A method according to any one of Claims 50 to 61, further including the step of determining the identity of a micro-organism by electronically analyzing the binary partial results of the individual identification tray wells.

63. A method according to any one of Claims 50 to 62, further including the step of determining the susceptibility of a micro-organism by electronically analysing the binary partial results of the individual susceptibility tray wells.

64. A method according to any one of Claims 50 to 63 further including the steps of sequentially electronically analysing the wells of interest in a tray to generate a series of binary partial results.

65. A method according to any one of Claims 50 to 64, including the step of programming the relative locations of the predetermined areas of interest.

66. A method according to any one of Claims 50 to 65, including the step of programming the shape of the predetermined areas of interest.

67. A method according to any one of Claims 50 to 66, characterised thereby that said step of preparing the test trays includes placing the trays in an incubator prior to electronic analysis thereof and electronically recording the identity and position of a tray in the incubator after it is placed in the incubator.

68. A method according to Claim 67, further including the steps of transporting the tray from the incubator to an inspection station, determining the identity of the tray by processing the video image, and transporting the tray back to the incubator.

69. A method according to any one of Claims 50 to 68, including the further step of electronically recognising illogical combinations of binary partial results and signalling that fact.

70. A method according to Claim 69, including the further step of retaining said tray when an illogical combination is detected.

**Revendications**

1. Appareil d'analyse microbiologique comprenant une chambre d'incubation (13) destinée à l'incubation d'une pluralité de plaques pour tests microbiologiques, chaque plaque comportant une pluralité de puits, un poste d'inspection (37) auquel les plaques pour tests peuvent être inspectées, un dispositif pour déplacer (29, 39) une plaque pour tests prédéterminée quelconque, comme on le souhaite, de la chambre d'incubation (13) vers le poste d'inspection (37), caractérisé en ce que le dispositif de déplacement comprend des voies (57) et au moins un support (19) capable de supporter une plaque pour tests dans un premier emplacement (101) et une plaque pour tests dans un second emplacement, un dispositif d'évacuation (49) capable d'enlever la plaque pour tests du premier emplacement sans enlever la plaque pour tests du second emplacement, l'appareil comprenant des moyens comportant une caméra vidéo (43) pour produire une image des plaques pour tests au poste d'inspection (37) et un dispositif (73) pour traiter l'image en vue de déterminer des résultats de tests.

2. Appareil suivant la revendication 1, caractérisé en ce que la chambre d'incubation (13) est disposée verticalement, les plaques pouvant être empilées les unes sur les autres dans cette chambre et le dispositif de déplacement (29, 39) comprend un élévateur (27) afin d'amener des plaques pour tests prédéterminées à un niveau correspondant au poste d'inspection (37).

3. Appareil suivant la revendication 2, caractérisé en ce que le dispositif de déplacement (29, 39) comprend, en outre, des moyens (51, 53) pour déplacer une plaque placée dans la chambre d'incubation (13), au niveau correspondant au poste d'inspection (37), de la chambre d'incubation (13) vers le poste d'inspection (37).

4. Appareil suivant la revendication 2 ou 3, caractérisé en ce qu'au moins une pile de plaques est disposée dans l'élévateur (27), la pile pouvant être déplacée par l'élévateur (27) afin de présenter des plaques pour tests prédéterminées au niveau correspondant au poste d'inspection (37).

5. Appareil suivant la revendication 2, 3 ou 4, caractérisé en ce que les plaques sont disposées en au moins deux piles dans la chambre d'incubation.

6. Appareil suivant l'une quelconque des revendications précédentes, comprenant, en outre, un moyen (89) pour régler l'humidité dans la chambre d'incubation (13).

7. Appareil suivant l'une quelconque des revendications précédentes, comprenant, en outre, un dispositif de détection (223, 227) pour déterminer la position de l'élévateur.

8. Appareil suivant la revendication 7, caractérisé en ce que le dispositif de détection (223, 227) comprend un capteur à effet Hall.

9. Appareil suivant l'une quelconque des revendications précédentes, caractérisé en ce que les plaques sont disposées dans des fentes (25) dans l'élévateur (27) et comprenant, en outre, un dispositif de détection (219, 221) pour détecter si une fente est occupée par une plaque.

10. Appareil suivant la revendication 9, caractérisé en ce que le dispositif de détection (219, 221) comprend un capteur à photodiode.

11. Appareil suivant l'une quelconque des revendications précédentes, caractérisé en ce que la voie comprend au moins deux rails parallèles (51).

12. Appareil suivant la revendication 11, comprenant, en outre, un dispositif de détection (231, 233) pour déterminer la position des plaques sur la voie.

13. Appareil suivant la revendication 12, caractérisé en ce que le dispositif de détection (231, 233) comprend un capteur à effet Hall.

14. Appareil suivant l'une quelconque des revendications 11 à 13, comprenant, en outre, une pluralité de supports (19) destinés à supporter chacun une ou plusieurs plaques, les supports (19) étant mobiles le long de la voie (51).

15. Appareil suivant l'une quelconque des revendications précédentes, caractérisé en ce que le dispositif d'évacuation (49) comprend un moyen (109) pour soulever la plaque du support.

16. Appareil suivant l'une quelconque des revendications précédentes, caractérisé en ce que le dispositif de déplacement (29, 39) comprend, en outre, un dispositif de tirage (53) pouvant être engagé avec un support (19) pour transporter le support le long de la voie (51).

17. Appareil suivant la revendication 16, caractérisé en ce que le dispositif de tirage (53) comprend une barre (55) pouvant être engagée dans un évidement (95) d'un support (19).

18. Appareil suivant l'une quelconque des revendications précédentes, comprenant, en outre, une poubelle (45) dans laquelle une plaque peut être déchargée après que les résultats pour cette plaque ont été déterminés.

19. Appareil suivant la revendication 18, comprenant, en outre, des moyens (46A, 46B) pour signaler lorsque la poubelle (45) est pleine.

20. Appareil suivant l'une quelconque des revendications précédentes, comprenant, en outre, un dispositif de distribution (77, 171, 47) pour débiter des réactifs dans les plaques.

21. Appareil suivant la revendication 20, comprenant, en outre, un poste à réactifs, une plaque pouvant être déplacée de la chambre d'incubation vers le poste de distribution.

22. Appareil suivant la revendication 20 ou 21, caractérisé en ce que le dispositif de distribution comprend plusieurs sources de réactifs (173) et un jeu de tubes (165) s'étendant respectivement à partir des sources de réactifs (173) vers une tête de distribution (47).

23. Appareil suivant la revendication 22, caractérisé en ce que le dispositif de distribution comprend un moyen (171) pour refouler du fluide dans les tubes (165) pour en débiter du réactif.

24. Appareil suivant la revendication 22 ou 23, caractérisé en ce que le dispositif de distribution comprend, en outre, des valves (169) pour assurer un écoulement dans un seul sens dans les tubes (165) et empêcher tout égouttement.

25. Appareil suivant la revendication 24, caractérisé en ce que les valves (169) comprennent une valve à bec de canard double pour chacun des tubes (165).

26. Appareil suivant l'une quelconque des revendications 23 à 25, caractérisé en ce que le moyen (171) destiné à déplacer du fluide dans les tubes comprend un solénoïde (177) associé à chacun des tubes (165), qui peut être actionné pour débiter une quantité prédéterminée de réactif.

27. Appareil suivant l'une quelconque des revendications 22 à 26, comprenant, en outre, un dispositif de détection (175A, 175B) pour déterminer lorsque la quantité d'un réactif tombe en dessous d'un niveau prédéterminé.

28. Appareil suivant l'une quelconque des revendications 22 à 27, caractérisé en ce qu'une ou plusieurs des sources de réactifs comprennent un module remplaçable.

29. Appareil suivant l'une quelconque des revendications 22 à 28, caractérisé en ce que le dispositif de déplacement comprend deux rails parallèles (51) et le dispositif de distribution comprend une tête de distribution (47) montée généralement au-dessus d'un des rails et un dispositif (59) est prévu pour déplacer la tête de distribution d'un rail à l'autre.

30. Appareil suivant la revendication 29, caractérisé en ce que le dispositif destiné à déplacer la tête de distribution comprend un troisième rail (61) disposé au-dessus de la paire de rails (51) et en substance à angle droit par rapport à celle-ci.

31. Appareil suivant l'une quelconque des revendications précédentes, caractérisé en ce que le support (19) comprend un gabarit (119) pour faciliter l'apposition manuelle d'information d'identification sur le support, l'information d'identification pouvant être lue par le dispositif de traitement d'image.

32. Appareil suivant l'une quelconque des revendications précédentes, comprenant, en outre, une source lumineuse (41) pour envoyer de la lumière à travers des plaques pour tests, au poste d'inspection.

33. Appareil suivant l'une quelconque des revendications précédentes, caractérisé en ce que la caméra vidéo (43) ou la source lumineuse (41) est disposée au-dessus du poste d'inspection, l'autre de ces éléments étant disposé en dessous du poste d'inspection.

34. Appareil suivant la revendication 32 ou 33, caractérisé en ce que la source lumineuse (41) est une lampe à cathode froide.

35. Appareil suivant l'une quelconque des revendications 32 à 34, caractérisé en ce que la source lumineuse (41) comprend une lame de diffusion destinée à distribuer la lumière en substance de manière égale sur le poste d'inspection.

36. Appareil suivant l'une quelconque des revendications précédentes, comprenant, en outre, un dispositif de filtrage (69) pour filtrer sélectivement la lumière reçue par la caméra vidéo en vue de déterminer les couleurs présentes dans au moins certains des puits.

37. Appareil suivant la revendication 36, caractérisé en ce que le dispositif de filtrage (69) comprend également un filtre de densité neutre.

38. Appareil suivant la revendication 36 ou 37, caractérisé en ce que le dispositif de filtrage (69) est disposé du même côté du poste d'inspection que la caméra vidéo (43).

39. Appareil suivant la revendication 38, caractérisé en ce que le dispositif de filtrage (69) et la caméra vidéo (43) sont disposés en dessous du poste d'inspection (37).

40. Appareil suivant la revendication 1, dans lequel le support (19) comprend un cadre relativement rigide (97) délimitant une ou plusieurs ouvertures centrales (101, 103) destinées à recevoir une plaque pour tests microbiologiques, le cadre comportant deux épaulements parallèles opposés (133, 135) et un cran (95), le dispositif de déplacement (29, 39) comprenant, en outre, deux rails parallèles (91, 93) et un moyen d'entraînement (55), les épaulements parallèles (133, 135) du cadre (97) étant à même, en service, de glisser sur les rails parallèles (91, 93), le dispositif de déplacement (29, 39) et le cran coopérant avec le moyen d'entraînement (55) pour déplacer le cadre (97) le long des rails.

41. Appareil suivant la revendication 40, caractérisé en ce que le cadre (97) définit deux ouvertures (101, 103) séparées par une traverse (99), chaque ouverture étant à même de recevoir une plaque.

42. Appareil suivant la revendication 41, caractérisé en ce que les ouvertures (101, 103) sont dimensionnées pour recevoir deux plaques différentes.

43. Appareil suivant la revendication 41 ou 42, comprenant, en outre, des moyens d'accès faisant partie intégrante du cadre pour permettre l'enlèvement d'une plaque seulement du support (19).

44. Appareil suivant la revendication 43, caractérisé en ce que les moyens d'accès comprennent deux encoches (107) qui s'étendent vers le bas à partir du bord supérieur du cadre.

45. Appareil suivant l'une quelconque des revendications 41 à 44, caractérisé en ce que le cadre comprend une ou plusieurs saillies (115) destinées à maintenir au moins une des plaques en place.

46. Appareil suivant l'une quelconque des revendications 40 à 45, caractérisé en ce que le cadre (97) comprend un moyen (117) qui en fait partie intégrante et qui s'étend généralement vers l'extérieur à partir d'un côté du cadre pour assurer une orientation préférée pour le support.

47. Appareil suivant l'une quelconque des revendications 40 à 46, caractérisé en ce que le cran (95) comprend un évidement ménagé dans un épaulement de la paire d'épaulements du cadre.

48. Appareil suivant la revendication 47, caractérisé en ce que le cadre comprend une rampe (121) s'étendant vers le haut et disposée à proximité de l'évidement.

49. Appareil suivant la revendication 47 ou 48, caractérisé en ce que les épaulements de la paire comprennent tous deux un évidement.

50. Procédé pour analyser automatiquement des tests préparés dans des plaques pour tests microbiologiques, comme des plaques de sensibilité et des plaques d'identification, les plaques comportant chacune une pluralité de puits, suivant lequel au moyen d'une caméra vidéo, on forme une image d'une plaque à lire, on n'analyse électroniquement que des zones d'intérêt prédéterminées dans l'image produite par la caméra, ces zones d'intérêt étant en substance situées dans les confins des puits de la plaque, on détermine électroniquement, pour chaque puits intéressant, si une zone d'intérêt présente une valeur associée qui excède un seuil prédéterminé pour cette zone d'intérêt, et on attribue électroniquement un résultat partiel binaire à chaque puits sur base du fait qu'un seuil prédéterminé pour chaque zone d'intérêt correspondante est dépassé, caractérisé en ce qu'on prépare les tests dans une plaque d'identification et une plaque de sensibilité qui sont montées chacune dans un support commun et on déplace automatiquement le support commun vers un poste d'inspection où une des plaques pour tests est analysée électroniquement à un premier instant prédéterminé et est retirée du support, et l'autre plaque pour tests est alors analysée électroniquement à un second instant prédéterminé ultérieur.

51. Procédé suivant la revendication 50, caractérisé en ce que l'opération consistant à analyser des zones d'intérêt prédéterminées comprend l'analyse, dans une plaque, de zones pour au moins deux puits différents, qui sont de formes différentes.

52. Procédé suivant la revendication 51 ou 52, caractérisé en ce qu'au moins deux puits d'intérêt comportent des seuils prédéterminés différents.

53. Procédé suivant l'une quelconque des revendications 50 à 52, comprenant, en outre, l'opération qui consiste à interposer au moins un filtre optique entre une plaque dans le poste d'inspection et la caméra vidéo, de sorte que le résultat partiel binaire pour au moins un puits d'intérêt peut indiquer si un changement de couleur s'est produit dans le puits.

54. Procédé suivant l'une quelconque des revendications 50 à 53, caractérisé en ce que les plaques portent un symbole de produit d'identification et en ce qu'il comprend, en outre, l'opération consistant à déterminer électroniquement le type particulier de plaque présent au poste d'inspection en traitant l'image, produite par la caméra vidéo, du symbole de produit d'identification sur la plaque.

55. Procédé suivant la revendication 54, caractérisé en ce que l'opération de détermination comprend l'analyse électronique des images uniquement dans des zones prédéterminées où le symbole de produit est situé.

56. Procédé suivant l'une quelconque des revendications 50 à 55, caractérisé en ce que la plaque comprend un endroit permettant l'écriture à la main et en ce qu'il comprend, en outre, l'opération consistant à lire par voie électronique l'écriture en traitant au moins une zone d'intérêt prédéterminée dans l'image correspondant à la position de l'écriture.

57. Procédé suivant la revendication 56, caractérisé en ce que la position de l'écriture dans l'image comprend plusieurs zones d'intérêt pour chaque symbole de l'écriture et l'opération consistant à lire l'écriture par voie électronique comprend une lecture électronique de chaque symbole.

58. Procédé suivant l'une quelconque des revendications 50 à 57, caractérisé en ce que l'opération de détermination comprend la détermination, dans la zone d'intérêt, du nombre de pixels qui ont une tension excédant une tension prédéterminée et l'attribution d'un résultat partiel binaire à chaque puits sur base du nombre de pixels qui excède la tension prédéterminée.

59. Procédé suivant l'une quelconque des revendications 50 à 58, comprenant, en outre, l'opération consistant à stocker un niveau lumineux de fond pour chaque pixel au moins dans les zones d'intérêt, afin de tenir compte de la variabilité spatiale de la lumière.

60. Procédé suivant l'une quelconque des revendications 50 à 59, caractérisé en ce que l'opération consistant à préparer les tests comprend l'incubation des plaques pendant un temps prédéterminé et en ce qu'il comprend, en outre, l'opération consistant à analyser une image vidéo de la plaque avant une incubation significative de celle-ci, afin de déterminer des valeurs de ligne de base pour cette plaque.

61. Procédé suivant la revendication 60, comprenant, en outre, l'opération consistant à comparer les valeurs de ligne de base pour chaque puits avec des valeurs de chaque puits après incubation.

62. Procédé suivant l'une quelconque des revendications 50 à 61, comprenant, en outre, l'opération consistant à déterminer l'identité d'un micro-organisme en analysant électroniquement les résultats partiels binaires des puits individuels des plaques d'identification.

63. Procédé suivant l'une quelconque des revendications 50 à 62, comprenant, en outre, l'opération consistant à déterminer la sensibilité d'un micro-organisme en analysant électroniquement les résultats partiels binaires des puits individuels des plaques de sensibilité.

64. Procédé suivant l'une quelconque des revendications 50 à 63, comprenant, en outre, les opérations consistant à analyser séquentiellement par voie électronique les puits d'intérêt dans une plaque en vue de produire une série de résultats partiels binaires.

65. Procédé suivant l'une quelconque des revendications 50 à 64, comprenant l'opération consistant à programmer les emplacements relatifs des zones d'intérêt prédéterminées.

66. Procédé suivant l'une quelconque des revendications 50 à 65, comprenant l'opération consistant à programmer la forme des zones d'intérêt prédéterminées.

67. Procédé suivant l'une quelconque des revendications 50 à 66, caractérisé en ce que l'opération consistant à préparer les plaques pour tests comprend le placement des plaques dans un incubateur avant leur analyse électronique et l'enregistrement électronique de l'identité et de la position d'une plaque dans l'incubateur après sa mise en place dans ce dernier.

68. Procédé suivant la revendication 67, comprenant, en outre, les opérations consistant à transporter la plaque de l'incubateur vers un poste d'inspection, à déterminer l'identité de la plaque en traitant l'image vidéo et à transporter la plaque en retour vers l'incubateur.

69. Procédé suivant l'une quelconque des revendications 50 à 68, comprenant l'opération supplémentaire qui consiste à reconnaître électroniquement des combinaisons illogiques de résultats partiels binaires et à signaler ce fait.

70. Procédé suivant la revendication 69, comprenant l'opération supplémentaire consistant à retenir la plaque lorsqu'une combinaison illogique est détectée.

**Patentansprüche**

1. Mikrobiologische Testvorrichtung, umfassend eine Inkubationzkammer (13) zum Inkubieren mehrerer mikrobiologischer Schalen, wobei jede Schale eine Vielzahl von Näpfchen aufweist, eine Untersuchungsstation (37), an der die Testschalen untersucht werden können, und Bewegungsmittel (29, 39), um bei Bedarf eine beliebige vorbestimmte Testschale von der Inkubationskammer (13) zur Untersuchungsstation (37) bewegen zu können, **dadurch gekennzeichnet,** daß die Bewegungsmittel Schienenmittel (57) und mindestens einen Träger (19) umfassen, wobei der Träger eine Testschale an einer ersten Position (101) und eine Testschale an einer zweiten Position (103) tragen kann, Entnahmemittel (49) vorgesehen sind, die die Testschale von der ersten Position entnehmen können, ohne die Testschale von der zweiten Position zu entnehmen, und

die Vorrichtung Mittel einzchließt, die eine Videokamera (43) zum Erzeugen eines Bilds von Testschalen an der Untersuchungsstation (37) und Mittel zum Verarbeiten (73) dieses Bilds zur Ermittlung von Testergebnissen umfassen.

2. Vorrichtung nach Anspruch 1, dadurch gekennzeichnet, daß die Inkubationskammer (13) vertikal angeordnet ist, wobei die Schalen in der Inkubationskammer übereinander stapelbar sind, und

die Bewegungsmittel (29, 39) einen Aufzug (27) zum Bewegen vorbestimmter Testschalen auf ein der Untersuchungsstation (37) entsprechendes Niveau umfassen.

3. Vorrichtung nach Anspruch 2, dadurch gekennzeichnet, daß die Bewegungsmittel (29, 39) außerdem Mittel (51, 53) zum Bewegen einer Schale, die sich in der Inkubationskammer (13) auf dem der Untersuchungsstation (37) entsprechenden Niveau befindet, aus der Inkubationskammer (13) zur Unterzuchungsstation (37) umfassen.

4. Vorrichtung nach Anspruch 2 oder Anspruch 3, dadurch gekennzeichnet, daß mindestens ein Stapel von Schalen in dem Aufzug (27) angeordnet ist, wobei der Stapel von dem Aufzug (27) bewegt werden kann, um vorbestimmte Testschalen auf das der Untersuchungsstation (37) entsprechende Niveau zu bringen.

5. Vorrichtung nach Anspruch 2, 3 oder 4, dadurch gekennzeichnet, daß die Schalen in mindestens zwei Stapeln in der Inkubationskammer angeordnet sind.

6. Vorrichtung nach einem der vorhergehenden Ansprüche, außerdem umfassend Mittel (89) zum Regeln der Feuchtigkeit in der Inkubationskammer (13).

7. Vorrichtung nach einem der vorhergehenden Ansprüche, außerdem umfassend Fühlermittel (223, 227) zur Bestimmung der Position des Aufzugs.

8. Vorrichtung nach Anspruch 7, dadurch gekennzeichnet, daß die Fühlermittel (223, 227) einen Halleffekt-Sensor umfassen.

9. Vorrichtung nach einem der vorhergehenden Ansprüche, dadurch gekennzeichnet, daß die Schalen im Aufzug (27) in Schlitzen (25) angeordnet sind und die Vorrichtung außerdem Fühlermittel (219, 221) zum Nachweis, ob ein Schlitz von einer Schale besetzt ist, aufweist.

10. Vorrichtung nach Anspruch 9, dadurch gekennzeichnet, daß die Fühlermittel (219, 221) einen Photodioden-Sensor umfassen.

11. Vorrichtung nach einem der vorhergehenden Ansprüche, dadurch gekennzeichnet, daß die Schienenmittel mindestens zwei parallele Schienen (51) umfassen.

12. Vorrichtung nach Anspruch 11, außerdem umfassend Fühlermittel (231, 233) zur Bestimmung der Position der Schalen auf den Schienenmitteln.

13. Vorrichtung nach Anspruch 12, dadurch gekennzeichnet, dau die Fühlermittel (231, 233) einen Halleffekt-Sensor umfassen.

14. Vorrichtung nach Ansprüchen 11 bis 13, außerdem umfassend eine Vielzahl der Träger (19) zum Tragen jeweils einer oder mehrerer Schalen, wobei die Träger (19) längs der Schienenmittel (51) verschiebbar sind.

15. Vorrichtung nach einem der vorhergehenden Ansprüche, dadurch gekennzeichnet, daß die Entnahmemittel (49) Mittel (109) zum Abheben der Schale vom Träger umfassen.

16. Vorrichtung nach einem der vorhergehenden Ansprüche, dadurch gekennzeichnet, daß die Bewegungsmittel (29, 39) außerdem Zugmittel (53) umfassen, die in einen Träger (19) eingreifen können, um den Träger entlang der Schienenmittel (51) zu transportieren.

17. Vorrichtung nach Anspruch 16, dadurch gekennzeichnet, daß die Zugmittel (53) einen Stab (55) umfassen, der in eine Ausnehmung (95) eines Trägers (19) eingreifen kann.

18. Vorrichtung nach einem der vorhergehenden Ansprüche, außerdem umfassend einen Abfallbehälter (45), in den eine Schale weggeworfen werden kann, nachdem die Ergebnisse für diese Schale bestimmt worden sind.

19. Vorrichtung nach Anspruch 18, außerdem umfassend Mittel (46A, 46B) zum Anzeigen, wann der Abfallbehälter (45) voll ist.

20. Vorrichtung nach einem der vorhergehenden Ansprüche, außerdem umfassend Abgabemittel (77, 171, 47) zum Zuführen von Reagentien zu den Schalen.

21. Vorrichtung nach Anspruch 20, außerdem umfassend eine Reagensstation, wobei eine Schale von der Inkubationskammer zu der Abgabestation bewegbar ist.

22. Vorrichtung nach Anspruch 20 oder Anspruch 21, dadurch gekennzeichnet, daß die Abgabemittel eine Vielzahl von Reagensquellen (173) und einen Satz Rohrleitungen (165) umfassen, wobei sich die Rohrleitungen entsprechend von der Vielzahl der Reagensquellen (173) zu einem Abgabekopf (47) erstrecken.

23. Vorrichtung nach Anspruch 22, dadurch gekennzeichnet, daß die Abgabemittel Mittel (171) zum Fördern von Fluid durch die Rohrleitungen (165) zum Abgeben von Reagentien aus den Rohrleitungen umfassen.

24. Vorrichtung nach Anspruch 22 oder Anspruch 23, dadurch gekennzeichnet, daß die Abgabemittel außerdem Ventilmittel (169) umfassen, um einen Ein-Richtungs-Fluß durch die Rohrleitungen (165) bereitzustellen und ein Abtropfen aus den Rohrleitungen zu verhindern.

25. Vorrichtung nach Anspruch 24, dadurch gekennzeichnet, daß die Ventilmittel (169) ein Zweifach-Klappenventil für jede Rohrleitung (165) umfassen.

26. Vorrichtung nach einem der Ansprüche 23 bis 25, dadurch gekennzeichnet, daß die Mittel (171) zum Fördern von Fluid durch die Rohrleitungen einen mit jeweils einer Rohrleitung (165) asoziierten Hubmagnet (177) umfassen, der zum Abgeben einer vorbestimmten Menge Reagens betätigbar ist.

27. Vorrichtung nach einem der Ansprüche 22 bis 26, außerdem umfassend Fühlermittel (175A, 175B) zum Nachweis, wann die Menge eines Reagens unter ein vorbestimmtes Niveau fällt.

28. Vorrichtung nach einem der Ansprüche 22 bis 27, dadurch gekennzeichnet, daß eine oder mehrere der Reagensquellen ein auswechselbares Modul ist.

29. Vorrichtung nach einem der Ansprüche 22 bis 28, dadurch gekennzeichnet, daß die Bewegungsmittel (29, 39) zwei parallele Schienen (51) und die Abgabemittel einen im allgemeinen oberhalo einer der Schienen angeordneten Abgabekopf (47) umfassen und Mittel (59) zum Verschieben des Abgabekopfs von einer zu der anderen Schiene vorgesehen sind.

30. Vorrichtung nach Anspruch 29, dadurch gekennzeichnet, daß die Mittel zum Verschieben des Abgabekopfs eine dritte Schiene (61) umfassen, die oberhalb von und im allgemeinen rechtwinklig zu dem Paar Schienen (51) angeordnet ist.

31. Vorrichtung nach einem der vorhergehenden Ansprüche, dadurch gekennzeichnet, daß der Träger (19) eine Schablone (119) umfaßt, um das manuelle Anbringen von Identifizierungsdaten an dem Träger zu erleichtern, wobei die Identifizierungsdaten mit den Bildverarbeitungsmitteln lesbar sind.

32. Vorrichtung nach einem der vorhergehenden Ansprüche, außerdem umfassend eine Lichtquelle (41), um ein Durchstrahlen mit Licht von Testschalen an der Untersuchungsstation zu verursachen.

33. Vorrichtung nach einem der vorhergehenden Ansprüche, dadurch gekennzeichnet, daß entweder die Videokamera (43) oder die Lichtquelle (41) oberhalb der Untersuchungsstation und die jeweils andere unterhalb der Untersuchungsstation angeordnet sind.

34. Vorrichtung nach Anspruch 32 oder 33, dadurch gekennzeichnet, daß die Lichtquelle (41) eine Kaltkathodenlampe ist.

35. Vorrichtung nach einem der Ansprüche 32 bis 34, dadurch gekennzeichnet, daß die Lichtquelle (41) eine Diffusorplatte umfaßt, um Licht im wesentlichen gleichmäßig über die Untersuchungsstation zu verteilen.

36. Vorrichtung nach einem der vorhergehenden Ansprüche, außerdem umfassend Filtermittel (69) zum selektiven Filtern des von der Videokamera empfangenen Lichts, um in wenigstens einigen der Näpfchen vorhandene Farben zu bestimmen.

37. Vorrichtung nach Anspruch 36, dadurch gekennzeichnet, daß die Filtermittel (69) auch ein neutrales Intensitätsfilter umfassen.

38. Vorrichtung nach Anspruch 36 oder Anspruch 37, dadurch gekennzeichnet, daß die Filtermittel (69) auf derselben Seite der Untersuchungsstation wie die Videokamera (43) angeordnet sind.

39. Vorrichtung nach Anspruch 38, dadurch gekennzeichnet, daß die Filtermittel (69) und die Videokamera (43) unterhalb der Untersuchungsstation (37) angeordnet sind.

40. Vorrichtung nach Anspruch 1, wobei der Träger (19) einen relativ starren Rahmen (97) umfaßt, der eine oder mehrere mittige Aussparungen (101, 103) zur Aufnahme der mikrobiologischen Testschale begrenzt, wobei der Rahmen ein Paar gegenüberliegender paralleler Vorsprünge (133, 135) und Rastmittel (95) aufweist, und die Bewegungsmittel (29, 39) außerdem ein Paar paralleler Schienen (91, 93) und Antriebsmittel (55) umfassen, wobei die parallelen Vorsprünge (133, 135) des Rahmens (97) geeignet sind, auf den parallelen Schienen (91, 93) der Bewegungsmittel (29, 39) zu laufen, und die Rastmittel mit den Antriebsmitteln (55) zusammenwirken, um den Rahmen (97) entlang der Schienen zu bewegen.

41. Vorrichtung nach Anspruch 40, dadurch gekennzeichnet, daß der Rahmen (97) zwei durch einen Quersteg (99) getrennte Aussparungen (101, 103) begrenzt, wobei jede Aussparung zur Aufnahme einer Schale geeignet ist.

42. Vorrichtung nach Anspruch 41, dadurch gekennzeichnet, daß die Größe der Aussparungen (101, 103) so gewählt ist, daß sie zwei verschiedene Schalen aufnehmen können.

43. Vorrichtung nach Anspruch 41 oder Anspruch 42, außerdem umfassend einstückig in dem Rahmen ausgebildete Zugriffsmittel, um das Entnehmen nur einer der Schalen von den Trägermitteln (19) zu erlauben.

44. Vorrichtung nach Anspruch 43, dadurch gekennzeichnet, daß die Zugriffsmittel zwei Schlitze (107) umfassen, die sich vom oberen Rand des Rahmens nach unten erstrecken.

45. Vorrichtung nach einem der Ansprüche 41 bis 44, dadurch gekennzeichnet, daß der Rahmen eine oder mehrere Nasen (115) umfaßt, um wenigstens eine der Schalen in Position zu halten.

46. Vorrichtung nach einem der Ansprüche 40 bis 45, dadurch gekennzeichnet, daß der Rahmen (97) Mittel (117) umfaßt, die einstückig mit dem Rahmen sind und im allgemeinen von einer Seite des Rahmens hervorstehen, um eine bevorzugte Orientierung des Trägers anzugeben.

47. Vorrichtung nach einem der Ansprüche 40 bis 46, dadurch gekennzeichnet, daß die Rastmittel (95) eine Ausnehmung umfassen, die in einem der Vorsprünge des Paars Vorsprünge des Rahmens ausgebildet ist.

48. Vorrichtung nach Anspruch 47, dadurch gekennzeichnet, daß der Rahmen eine aufwärtsgerichtete, an die Ausnehmung angrenzende Rampe (121) umfaßt.

49. Vorrichtung nach Anspruch 47 oder Anspruch 48, dadurch gekennzeichnet, daß beide Vorsprünge des Paars Vorsprünge eine Ausnehmung umfassen.

50. Verfahren zum automatischen Analysieren von Tests, die in mikrobiologischen Testschalen, wie Suszeptibilitätsschalen und Identifizierungsschalen bereitgestellt sind, wobei die Schalen jeweils eine Vielzahl von Näpfchen aufweisen, umfassend die Schritte des Anfertigens eines Bildes einer auszuwertenden Schale mit einer Videokamera,
eines elektronischen Analysierens nur von vorbestimmten interessierenden Bereichen in dem von der Kamera gemachten Bild, wobei die interessierenden Bereiche im wesentlichen innerhalb der Umrisse der Schalennäpfchen liegen, eines elektronischen Ermittelns für jedes interessierende Näpfchen, ob ein interessierender Bereich darin einen zugehörigen Wert aufweist, der einen vorbestimmten Schwellenwert für diesen interessierenden Bereich überschreitet, und eines elektronischen Zuordnens eines binären Teilergebnisses zu jedem Näpfchen, ausgehend davon, ob jeweils für den zugehörigen interessierenden Bereich ein vorbestimmter Schwellenwert überschritten wird,
**dadurch gekennzeichnet,** daß die Tests in einer Identifizierungsschale und einer Suszeptibilitätsschale bereitgestellt werden, die beide in einem gemeinsamen Träger angeordnet sind, und der gemeinsame Träger automatisch zu einer Untersuchungsstation bewegt wird, bei der eine der Testschalen zu einer ersten vorbestimmten Zeit elektronisch analysiert und vom Träger entnommen wird, und bei der die andere Testschale zu einer späteren, zweiten vorbestimmten Zeit elektronisch analysiert wird.

51. Verfahren nach Anspruch 50, dadurch gekennzeichnet, daß der Schritt des Analysierens vorbestimmter interessierender Bereiche das Analysieren von Bereichen wenigstens zweier verschiedener, eine unterschiedliche Form aufweisender Näpfchen einer Schale umfaßt.

52. Verfahren nach Anspruch 51 oder Anspruch 52, dadurch gekennzeichnet, daß wenigstens zwei interessierende Näpfchen verschiedene vorbestimmte Schwellenwerte haben.

53. Verfahren nach einem der Ansprüche 50 bis 52, umfassend den weiteren Schritt eines Einfügens wenigstens eines optischen Filters zwischen eine in der Untersuchungsstation befindliche Schale und die Videokamera, so daß das binäre Teilergebnis für wenigstens ein interessierendes Näpfchen aussagen kann, ob in dem Näpfchen ein Farbwechsel aufgetreten ist.

54. Verfahren nach einem der Ansprüche 50 bis 53, dadurch gekennzeichnet, daß
die Schalen ein Produktidentifizierungs-Symbol aufweisen und
daß das Verfahren außerdem den Schritt eines elektronischen Ermittelns des speziellen, an der Untersuchungsstation anwesenden Schalentyps durch Verarbeiten des von der Videokamera erzeugten Bilds des Produktidentifizierungs-Symbols an der Schale umfaßt.

55. Verfahren nach Anspruch 54, dadurch gekennzeichnet, daß der Ermittlungsschritt ein elektronisches Analysieren der Bilder nur an vorbestimmten Bereichen, an denen sich das Produktsymbol befindet, umfaßt.

56. Verfahren nach einem der Ansprüche 50 bis 55, dadurch gekennzeichnet, daß die Schale eine Stelle umfaßt, auf die manuell geschrieben werden kann, und
daß das Verfahren außerdem den Schritt eines elektronischen Lesens der Aufschrift durch Verarbeiten wenigstens eines vorbestimmten, der Position der Aufschrift entsprechenden interessierenden Bereichs in dem Bild umfaßt.

57. Verfahren nach Anspruch 56, dadurch gekennzeichnet, daß die Position der Aufschrift in dem Bild für jedes Symbol der Aufschrift mehrere interessierende Bereiche umfaßt, und der Schritt des elektronischen Lesens der Aufschrift ein elektronisches Lesen jedes Symbols umfaßt.

58. Verfahren nach einem der Ansprüche 50 bis 57, dadurch gekennzeichnet, daß der Ermittlungsschritt ein Ermitteln der Anzahl der Bildpunkte in dem interessierenden Bereich, die eine eine vorbestimmte Spannung übersteigende Spannung aufweisen, und ein Zuordnen eines binären Teilergebnisses zu jedem Näpfchen, ausgehend von der Anzahl der Bildpunkte, die die vorbestimmte Spannung übersteigen, umfaßt.

**59.** Verfahren nach einem der Ansprüche 50 bis 58, außerdem umfassend den Schritt eines Speicherns einer Lichtuntergrund-Intensität für jeden Bildpunkt, und zwar wenigstens in den interessierenden Bereichen, um eine räumliche Ungleichförmigkeit des Licht zu berücksichtigen.

**60.** Verfahren nach einem der Ansprüche 50 bis 59, dadurch gekennzeichnet, daß der Schritt des Bereitstellens der Tests ein Inkubieren der Schalen für eine vorbestimmte Zeit und außerdem den Schritt eines Analysierens eines Videobilds der Schale vor einer signifikanten Inkubation der Schale zur Bestimmung von Bezugswerten für diese Schale umfaßt.

**61.** Verfahren nach Anspruch 60, außerdem umfassend den Schritt eines Vergleichens der Bezugswerte jedes Näpfchens mit den nach der Inkubation gewonnenen Werten des jeweiligen Näpfchens.

**62.** Verfahren nach einem der Ansprüche 50 bis 61, außerdem umfassend den Schritt eines Ermittelns der Identität eines Mikroorganismus durch elektronisches Analysieren der binären Teilergebnisse der einzelnen Identifizierungsschalen-Näpfchen.

**63.** Verfahren nach einem der Ansprüche 50 bis 62, außerdem umfassend den Schritt eines Ermittelns der Suszeptibilität eines Mikroorganismus durch elektronisches Analysieren der binären Teilergebnisse der einzelnen Suszeptibilitätsschalen-Näpfchen.

**64.** Verfahren nach einem der Ansprüche 50 bis 63, außerdem umfassend die Schritte eines sequentiellen elektronischen Analysierens der interessierenden Näpfchen in einer Schale zur Erzeugung einer Serie von binären Teilergebnissen.

**65.** Verfahren nach einem der Ansprüche 50 bis 64, umfassend den Schritt eines Programmierens der Relativpositionen der vorbestimmten interessierenden Bereiche.

**66.** Verfahren nach einem der Ansprüche 50 bis 65, umfassend den Schritt eines Programmierens der Form der vorbestimmten interessierenden Bereiche.

**67.** Verfahren nach einem der Ansprüche 50 bis 66, dadurch gekennzeichnet, daß der Schritt des Bereitstellens der Testschalen ein Plazieren der Schalen in einem Inkubator vor der elektronischen Analyse der Schalen und ein elektronisches Aufzeichnen der Identität und der Position einer Schale im Inkubator, nachdem diese in den Inkubator eingebracht wurde, umfaßt.

**68.** Verfahren nach Anspruch 67, außerdem umfassend die Schritte eines Transportierens der Schale vom Inkubator zur Untersuchungsstation, eines Ermittelns der Identität der Schale durch Verarbeitung des Videobilds und eines Transportierens der Schale zurück zum Inkubator.

**69.** Verfahren nach einem der Ansprüche 50 bis 68, umfassend die weiteren Schritte eines elektronischen Erkennens nicht sinnvoller Kombinationen binärer Teilergebnisse und eines Anzeigens dieses Sachverhalts.

**70.** Verfahren nach Anspruch 69, umfassend den weiteren Schritt eines Zurückhaltens der Schale, wenn eine nicht sinnvolle Kombination gefunden wird.

FIG.1

FIG.2

FIG.3

FIG. 4

FIG.5

FIG. 6

FIG. 7

FIG. 8

FIG. 9

FIG.10

FIG.11

FIG.12

FIG.13

FIG.14

FIG.15

FIG.16

FIG.17

FIG.18